(19) Europäisches Patentamt
European Patent Office
Office européen des brevets

(11) **EP 4 444 008 A1**

(12) **EUROPEAN PATENT APPLICATION**
published in accordance with Art. 153(4) EPC

(43) Date of publication:
09.10.2024 Bulletin 2024/41

(51) International Patent Classification (IPC):
*H04W 72/12* (2023.01)

(21) Application number: 21966061.0

(22) Date of filing: 02.12.2021

(52) Cooperative Patent Classification (CPC):
H04W 72/12

(86) International application number:
PCT/CN2021/135190

(87) International publication number:
WO 2023/097629 (08.06.2023 Gazette 2023/23)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: GUANGDONG OPPO MOBILE
TELECOMMUNICATIONS
CORP., LTD.
Dongguan, Guangdong 523860 (CN)

(72) Inventors:
• SHI, Zhihua
Dongguan, Guangdong 523860 (CN)
• CHEN, Wenhong
Dongguan, Guangdong 523860 (CN)
• HUANG, Yingpei
Dongguan, Guangdong 523860 (CN)
• LIU, Zhe
Dongguan, Guangdong 523860 (CN)

(74) Representative: RGTH
Patentanwälte PartGmbB
Neuer Wall 10
20354 Hamburg (DE)

(54) **INFORMATION CONFIGURATION METHODS, TERMINAL DEVICES AND NETWORK DEVICES**

(57) This application relates to an information configuration method, a terminal device, and a network device, where the method includes: receiving, by the terminal device, first configuration information, where the first configuration information is used to indicate a first sounding reference signal resource set (SRS resource set), the first SRS resource set includes one or more sounding reference signal resources SRS resources (SRS resource), and the one or more SRS resources include at least one first SRS resource for 3-port transmission. According to this application, 3-port information configuration is implemented, so as to implement uplink data transmission based on the 3-port information configuration.

300

A terminal device receives first configuration information transmitted by a network device; and the first configuration information is used to indicate a first SRS resource set, the first SRS resource set includes one or more SRS resources, and the one or more SRS resources include at least one first SRS resource for 3-port transmission

S310

FIG. 3

EP 4 444 008 A1

**Description**

**TECHNICAL FIELD**

This application relates to the field of communications, and more specifically, to an information configuration method, a terminal device, and a network device.

**BACKGROUND**

As a main uplink data bearer channel of a physical layer, a physical uplink shared channel (Physical Uplink Shared Channel, PUSCH) is used for scheduling and transmitting uplink data, and may carry control information, user service information, broadcast service information, and the like.

The physical layer defines two types of uplink reference signals, namely, a demodulation reference signal (Demodulation RS, DMRS) and a sounding reference signal (Sounding Reference Signal, SRS). The DMRS is a reference signal transmitted by a terminal on an uplink shared channel or an uplink control channel, and is used as a reference signal for demodulating when a network device receives uplink data/control information. The SRS is used by the network device to estimate uplink radio channel quality. In this way, the network device may allocate a resource to a PUSCH of a terminal based on the radio channel quality, and select different transmission parameters.

**SUMMARY**

Embodiments of this application provide an information configuration method, a terminal device, and a network device, so that 3-port information configuration may be implemented, thereby implementing uplink data transmission based on the 3-port information configuration.

An embodiment of this application provides an information configuration method, applied to a terminal device, including:

receiving, by the terminal device, first configuration information.

The first configuration information is used to indicate a first sounding reference signal resource set (SRS resource set), the first SRS resource set includes one or more sounding reference signal resources (SRS resource), and the one or more SRS resources include at least one first SRS resource for 3-port transmission.

An embodiment of this application provides a terminal reporting method, applied to a terminal device, including:

performing, by the terminal device, configuration based on the information configuration method according to any one of embodiments in this application, and reporting a first terminal capability.

The first terminal capability supports a first SRS resource for 3-port transmission and/or supports 3-port uplink physical shared channel transmission.

An embodiment of this application provides an information configuration method, applied to a network device, including:

transmitting, by a network device, first configuration information.

The first configuration information is used to indicate a first SRS resource set, the first SRS resource set includes one or more SRS resources, and the one or more SRS resources include at least one first SRS resource for 3-port transmission.

An embodiment of this application provides a terminal device, including:

a first receiving unit, configured to receive first configuration information.

The first configuration information is used to indicate a first SRS resource set, the first SRS resource set includes one or more SRS resources, and the one or more SRS resources include at least one first SRS resource for 3-port transmission.

An embodiment of this application provides a terminal device, including:

a reporting unit, configured to perform configuration based on the information configuration method according to any one of embodiments in this application, and report a first terminal capability.

The first terminal capability supports a first SRS resource for 3-port transmission and/or supports 3-port uplink physical shared channel transmission.

An embodiment of this application provides a network device, including:

a first transmitting unit, configured to transmit first configuration information.

The first configuration information is used to indicate a first SRS resource set, the first SRS resource set includes one or more SRS resources, and the one or more SRS resources include at least one first SRS resource for 3-port transmission.

An embodiment of this application provides a terminal device, including a processor and a memory. The memory is configured to store a computer program, and the processor is configured to invoke and run the computer program stored in the memory, to cause the terminal device to execute the method according to an embodiment of this application.

An embodiment of this application provides a network device, including a processor and a memory. The memory is configured to store a computer program, and the processor is configured to invoke and run the computer program stored in the memory, to cause the network device to execute the method according to an embodiment of this application.

An embodiment of this application provides a chip, configured to implement the method according to an embodiment of this application.

Specifically, the chip includes a processor, configured to invoke a computer program from a memory and run the computer program, to cause a device installed with the chip to execute the method according to an embodiment of this application.

An embodiment of this application provides a computer-readable storage medium, configured to store a computer program. When the computer program is run by a device, the device executes the method according to an embodiment of this application.

An embodiment of this application provides a computer program product, including computer program instructions, and the computer program instructions cause a computer to execute the method according to an embodiment of this application.

An embodiment of this application provides a computer program. When the computer program runs on a computer, the computer executes the method according to an embodiment of this application.

In embodiments of this application, 3-port information configuration is implemented, thereby implementing uplink data transmission based on the 3-port information configuration.

## BRIEF DESCRIPTION OF DRAWINGS

FIG. 1 is a schematic diagram of an application scenario according to an embodiment of this application.
FIG. 2 is a schematic diagram of another application scenario according to an embodiment of this application.
FIG. 3 is a schematic flowchart of an information configuration method according to an embodiment of this application.
FIG. 4 is a schematic flowchart of an information configuration method according to an embodiment of this application.
FIG. 5 is a schematic flowchart of an information configuration method according to an embodiment of this application.
FIG. 6 is a schematic diagram of a configuration manner of a first SRS resource according to an embodiment of this application.
FIG. 7 is a schematic diagram of another configuration manner of a first SRS resource according to an embodiment of this application.
FIG. 8 is a schematic diagram of another configuration manner of a first SRS resource according to an embodiment of this application.
FIG. 9 is a schematic diagram of another configuration manner of a first SRS resource according to an embodiment of this application.
FIG. 10 is a schematic flowchart of an information configuration method according to another embodiment of this application.
FIG. 11 is a schematic flowchart of an information configuration method according to another embodiment of this application.
FIG. 12 is a schematic flowchart of an information configuration method according to another embodiment of this application.
FIG. 13 is a schematic flowchart of an information configuration method according to another embodiment of this application.
FIG. 14 is a schematic flowchart of an information configuration method according to another embodiment of this application.
FIG. 15 is a schematic block diagram of a terminal device according to an embodiment of this application.
FIG. 16 is a schematic block diagram of a network device according to an embodiment of this application.
FIG. 17 is a schematic block diagram of a communications device according to an embodiment of this application.
FIG. 18 is a schematic block diagram of a chip according to an embodiment of this application.
FIG. 19 is a schematic block diagram of a communications system according to an embodiment of this application.

## DESCRIPTION OF EMBODIMENTS

The following describes the technical solutions in embodiments of this application in combination with the accompanying drawings in embodiments of this application.

The technical solutions in embodiments of this application may be applied to various communications systems, for example, a global system of mobile communication (Global System of Mobile communication, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, a long term evolution-advanced (Advanced long term evolution, LTE-A) system, a new radio (New Radio, NR) system, an evolved system of an NR system, an LTE-based access to unlicensed spectrum (LTE-based access to unlicensed spectrum, LTE-U) system, an NR-based access to unlicensed spectrum (NR-based access to unlicensed spectrum, NR-U) system, a non-terrestrial network (Non-Terrestrial Networks, NTN) system, a universal mobile telecommunication system (Universal Mobile Telecommunication System, UMTS), wireless local area networks (Wireless Local Area Networks, WLAN), wireless fidelity (Wireless Fidelity, WiFi), a 5th generation (5th-Generation, 5G) system, or another communications system.

Generally, a quantity of connections supported by a conventional communications system is limited and is also easy to implement. However, with development of communication technologies, a mobile communications system not only supports conventional communication, but also supports, for example, device-to-device (Device to Device, D2D) communication, machine to machine (Machine to Machine, M2M) communication, machine type communication (Machine Type Communication, MTC), vehicle to vehicle (Vehicle to Vehicle, V2V) communication, or vehicle to everything (Vehicle to everything, V2X) communication. Embodiments of this application may also be applied to these communications systems.

Optionally, a communications system in embodiments of this application may be applied to a carrier aggregation (Carrier Aggregation, CA) scenario, a dual connectivity (Dual Connectivity, DC) scenario, or a standalone (Standalone, SA) networking scenario.

Optionally, the communications system in embodiments of this application may be applied to an unlicensed spectrum, and the unlicensed spectrum may also be considered as a shared spectrum. Alternatively, the communications system in embodiments of this application may be applied to a licensed spectrum, and the licensed spectrum may also be considered as a non-shared spectrum.

Embodiments of this application are described with reference to a network device and a terminal device. The terminal device may also be referred to as a user equipment (User Equipment, UE), an access terminal, a user unit, a user station, a mobile site, a mobile station, a remote station, a remote terminal, a mobile device, a user terminal, a terminal, a wireless communications device, a user agent, a user apparatus, or the like.

The terminal device may be a station (STAION, ST) in a WLAN, may be a cellular phone, a cordless phone, a session initiation system (Session Initiation Protocol, SIP) phone, a wireless local loop (Wireless Local Loop, WLL) station, a personal digital assistant (Personal Digital Assistant, PDA) device, a handheld device with a wireless communication function, a computing device or another processing device connected to a wireless modem, a vehicle-mounted device, a wearable device, a terminal device in a next-generation communications system such as an NR network, or a terminal device in a future evolved public land mobile network (Public Land Mobile Network, PLMN), or the like.

In embodiments of this application, the terminal device may be deployed on land, including being indoors or outdoors, may be handheld, wearable, or vehicle-mounted. The terminal device may be deployed on water (for example, on a ship), or may be deployed in the air (for example, on an airplane, an air balloon, or a satellite).

In embodiments of this application, the terminal device may be a mobile phone (Mobile Phone), a pad (Pad), a computer with a wireless transceiver function, a virtual reality (Virtual Reality, VR) terminal device, an augmented reality (Augmented Reality, AR) terminal device, a wireless terminal device in industrial control (industrial control), a wireless terminal device in self driving (self-driving), a wireless terminal device in remote medical (remote medical), a wireless terminal device in smart grid (smart grid), a wireless terminal device in transportation safety (transportation safety), a wireless terminal device in smart city (smart city), or a wireless terminal device in smart home (smart home), or the like.

By way of example rather than limitation, in embodiments of this application, the terminal device may alternatively be a wearable device. The wearable device may also be referred to as an intelligent wearable device, and is a general term for wearable devices such as glasses, gloves, watches, clothes, and shoes that are intelligently designed and developed based on daily wearing by using a wearable technology. The wearable device is a portable device that can be directly worn or integrated into clothes or accessories of a user. In addition to being a hardware device, the wearable device can also realize various functions through software support, data interaction, and cloud interaction. In a broad sense, wearable smart devices may include a full-featured and large-sized device that can provide full or partial functions without relying on a smart phone, for example, a smart watch or smart glasses, and devices that only focus on a specific type of application function and need to cooperate with another device such as a smart phone for use, for example, various smart bracelets and smart jewelries for physical sign monitoring.

In embodiments of this application, the network device may be a device configured to communicate with a mobile device. The network device may be an access point (Access Point, AP) in a WLAN, may be a base transceiver station (Base Transceiver Station, BTS) in GSM or CDMA, may be a NodeB (NodeB, NB) in WCDMA, or may be an evolutional Node B (Evolutional Node B, eNB or eNodeB) in LTE, or a relay station or an access point, or a vehicle-mounted device, a wearable device, a network device (gNB) in an NR network, or a network device in a future evolved PLMN, or a network device in an NTN, or the like.

By way of example rather than limitation, in embodiments of this application, the network device may have a mobility characteristic. For example, the network device may be a mobile device. Optionally, the network device may be a satellite or a balloon station. For example, the satellite may be a low earth orbit (low earth orbit, LEO) satellite, a medium earth orbit (medium earth orbit, MEO) satellite, a geostationary earth orbit (geostationary earth orbit, GEO) satellite, a high elliptical orbit (High Elliptical Orbit, HEO) satellite, or the like. Optionally, the network device may alternatively be a base station disposed in a location such as land or water.

In embodiments of this application, the network device may provide a service for a cell. The terminal device communicates with the network device by using a transmission resource (for example, a frequency domain resource or a spectrum resource) used in the cell. The cell may be a cell corresponding to a network device (for example, a base station). The cell may belong to a macro base station, or may be a base station corresponding to a small cell (Small cell). The small cell herein may include a metro cell (Metro cell), a micro cell (Micro cell), a pico cell (Pico cell), a femto cell (Femto cell), and the like. These small cells have characteristics such as small coverage and low transmit power, and are suitable for providing a high-rate data transmission service.

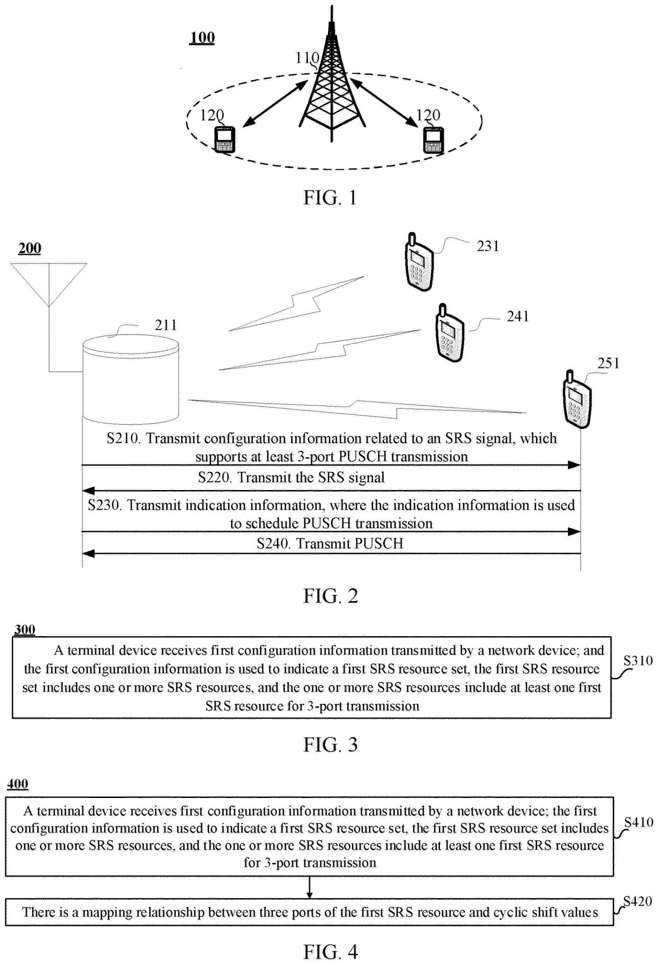

FIG. 1 exemplarily shows a communications system 100. The communications system 100 includes one network device 110 and two terminal devices 120. Optionally, the communications system 100 may include a plurality of network devices 110, and another quantity of terminal devices 120 may be included in coverage of each network device 110, which is not limited in embodiments of this application.

Optionally, the communications system 100 may further include another network entity such as a mobility management entity (Mobility Management Entity, MME) and an access and mobility management function (Access and Mobility Management Function, AMF), which is not limited in embodiments of this application.

The network device may further include an access network device and a core network device. That is, the wireless communications system further includes a plurality of core networks configured to communicate with the access network device. The access network device may be an evolutional node B (evolutional node B, which may be an eNB or an e-Node B for short), a macro base station, a micro base station (also referred to as a "small cell"), a pico base station, an access point (access point, AP), a transmission point (transmission point, TP), or a new generation Node B (new generation Node B, gNodeB), or the like in a long term evolution (LTE) system, a next generation (mobile communications system) (next radio, NR) system, or an authorized auxiliary access long-term evolution (authorized auxiliary access long-term evolution, LAA-LTE) system.

It should be understood that a device having a communication function in a network/system in embodiments of this application may be referred to as a communications device. The communications system shown in FIG. 1 is used as an example. The communications device may include a network device and a terminal device that have a communications function. The network device and the terminal device may be specific devices in embodiments of this application. Details are not described herein again. The communications device may further include another device in the communications system, such as a network controller and a mobility management entity, which is not limited in embodiments of this application.

It should be understood that the terms "system" and "network" may often be used interchangeably herein. In this specification, the term "and/or" is merely an association relationship that describes associated objects, and represents that there may be three relationships. For example, A and/or B may represent three cases: only A exists, both A and B exist, and only B exists. In addition, the character "/" herein generally indicates an "or" relationship between the associated objects.

It should be understood that, the "indication" mentioned in embodiments of this application may be a direct indication or an indirect indication, or indicate an association. For example, if A indicates B, it may mean that A directly indicates B, for example, B can be obtained from A. Alternatively, it may mean that A indicates B indirectly, for example, A indicates C, and B can be obtained from C. Alternatively, it may mean that there is an association between A and B.

In the description of embodiments of this application, the term "corresponding" may mean that there is a direct or indirect correspondence between two elements, or that there is an association between two elements, or that there is a relationship of "indicating" and "being indicated", "configuring" and "being configured", or the like.

To facilitate understanding of the technical solutions in embodiments of this application, the following describes related technologies in embodiments of this application. The following related technologies, as optional solutions, may be randomly combined with the technical solutions of embodiments of this application, all of which fall within the protection scope of embodiments of this application.

NR is used as an example. In an uplink data transmission solution, uplink transmission supports codebook based transmission (codebook based PUSCH) and non-codebook based transmission (non-codebook based PUSCH). For the codebook based transmission, a typical procedure includes: (1) a terminal device transmits an SRS signal to a network device (such as a base station); (2) the network device performs uplink channel detection based on the SRS signal transmitted by the terminal device, and the network device may further indicate, to the terminal device by using DCI, information such as an SRS resource corresponding to transmission of a PUSCH, a quantity of layers for uplink transmission, a precoding matrix, and frequency domain resource allocation; and (3) the terminal device receives the DCI, and transmits the PUSCH according to an indication of the DCI.

Based on a current NR system, the codebook based transmission supports 1-port (1-port) PUSCH transmission, 2-port (2-port) PUSCH transmission, or 4-port (4-port) PUSCH transmission. An SRS resource also supports 1-port transmission, 2-port transmission, or 4-port transmission.

For example, the terminal device is a mobile phone. Currently, a mobile phone may support 1-port or 2-port PUSCH transmission. To adapt to the 1-port, 2-port, or 4-port PUSCH transmission, hardware inside the mobile phone may also be designed to support simultaneous operation of four transmit channels. However, this causes a sharp increase in hardware costs of the mobile phone, and more internal space is required for the mobile phone, finally resulting in a heavy thickness of the mobile phone and power consumption of the mobile phone to be difficult to control. Considering that a hardware design inside a mobile phone can already support simultaneous operation of three transmit channels, that is to say, the mobile phone has a possibility of supporting 3-port PUSCH transmission, a solution that supports 3-port PUSCH transmission is introduced in an NR system, so as to fully exert hardware performance of an existing mobile phone. In this way, not only a hardware capability of an existing mobile phone can be fully utilized, uplink data transmission efficiency can be improved, and user experience can be improved, but also manufacturing costs of the mobile phone can be well controlled, the mobile phone can be kept light, and relatively low power consumption can be maintained.

By using embodiments of this application, the network device may enable, based on a configuration related to 3-port PUSCH transmission, a terminal device (for example, a mobile phone) to support 3-port PUSCH transmission. FIG. 2 is a schematic diagram of another application scenario according to an embodiment of this application, and exemplarily shows a process of implementing uplink data transmission based on an information configuration method in embodiments of this application. For example, the network device is a base station, and the terminal device is a mobile phone. A base station 211 communicates with a mobile phone 231, a mobile phone 241, and a mobile phone 251. Communication between the base station 211 and the mobile phone 251 is used as an example. An information interaction process includes some or all of the following steps:

S210: The base station transmits configuration information related to an SRS signal to the terminal device.

In some examples, the configuration information (supporting at least 3-port PUSCH transmission) related to an SRS signal is used to indicate a first SRS resource set, where the first SRS resource set includes one or more sounding reference signal resources (SRS resource), and the one or more SRS resources include at least one first SRS resource for 3-port transmission.

S220: The terminal device transmits an SRS signal to the network device based on the configuration information related to an SRS signal.

S230: The network device receives the corresponding SRS signal, and transmits indication information to the terminal device, to instruct the terminal device to transmit a PUSCH, where the indication information is used to schedule PUSCH transmission, and the indication information may be transmitted by using DCI or RRC.

S240: The terminal device transmits the PUSCH to the network device.

The technical terms in embodiments of this application will be explained below. Even if one name is used in the following description, the name is only for the purpose of uniform description throughout this specification, and is only used as a reference. In fact, there are other possible names, which will not be described in detail herein.

1. An SRS signal is an important reference signal in a 5G/NR system, and is widely used in various functions in an NR system, for example, acquisition of downlink channel state information (UE sounding procedure for DL CSI acquisition); frequency domain scheduling and precoding determination for uplink transmission; an antenna switching (Antenna Switching) function; a carrier switching (Carrier Switching) function; a positioning function; cooperating with codebook based uplink transmission (codebook-based UL transmission); and cooperating with non-codebook based uplink transmission (Non-Codebook based UL transmission).

2. Transmission of an SRS signal includes periodic (Periodic) SRS transmission, semi-persistent (Semi-persistent) SRS transmission, and aperiodic (Aperiodic) SRS transmission.

The periodic SRS transmission refers to a periodically transmitted SRS, and a cycle and a slot offset of the SRS are configured by using RRC signalling. Once receiving a corresponding configuration parameter, a terminal transmits an SRS according to a specific cycle until configuration of the RRC fails. Spatial relation information (Spatial Relation Info) of the periodic SRS (referred to as a target SRS or a target SRS resource for ease of subsequent description) is implicitly indicated by using a transmission beam (or referred to as a spatial transmission filter), and may be configured by using RRC signalling. The spatial relation information may indicate a channel state information-reference signal (Channel State Information-Reference signal, CSI-RS), a synchronization signal block (Synchronization Signal Block, SSB), or a reference SRS. The terminal device determines a transmission beam (or referred to as a spatial transmission filter) of a target SRS resource based on a receiving beam (or referred to as a spatial receiving filter) of the indicated CSI-RS/SSB, or determines a transmission beam (or referred to as a spatial transmission filter) of a target SRS resource based on a transmission beam (or referred to as a spatial transmission filter) of a reference SRS resource. Similarly, transmission beams (or referred to as spatial transmission filters) respectively corresponding to a semi-persistent SRS and an aperiodic SRS are also determined by using the spatial relation information.

For the semi-persistent SRS transmission, a cycle and a slot offset (slot offset) may be configured by using RRC signalling, but activation signalling and deactivation signalling may be carried by using a medium access control control element (MAC CE). After receiving the activation signalling, a terminal transmits an SRS according to a specific cycle until the deactivation signalling is received. Spatial relation information (a transmission beam) of the semi-persistent SRS is carried together by activating the MAC CE of the SRS. After receiving the cycle and the slot offset configured by using RRC, the terminal device may determine, according to $\left(N_{slot}^{frame,\mu}n_f + n_{s,f}^{\mu} - T_{offset}\right) \bmod T_{SRS} = 0$,

a slot that can be used to transmit the SRS, where $T_{SRS}$ and $T_{offset}$ are a configured cycle and an offset respectively, and $n_f$ and $n_{s,f}^{\mu}$ are a radio frame and a slot number, respectively.

For the aperiodic SRS transmission, a base station may trigger SRS transmission of the terminal by using uplink or downlink DCI. Triggering signalling, as shown in FIG. 1, used to trigger the aperiodic SRS transmission may be carried by using DCI for scheduling a PUSCH or a PDSCH in a UE-specific search space, or may be carried by using a DCI format 2_3 in a common search space. The DCI format 2_3 may be used not only to trigger the aperiodic SRS transmission, but also to configure a TPC command of an SRS on a group of UEs or a group of carriers.

Table 1

| Value of SRS request field (Value of SRS request field) | Triggered aperiodic SRS resource set(s) for DCI formats 0_1, 1_0, and 2_3 configured with higher layer parameter "srs-TPC-PDCCH-Group" set to "typeB" (Triggered aperiodic SRS resource set(s) for DCI format 0_1, 1_0, and 2_3 configured with higher layer parameter *srs-TPC-PDCCH-Group* set to 'typeB') |
|---|---|
| 00 | No aperiodic SRS resource set triggered (No aperiodic SRS resource set triggered) |
| 01 | SRS resource set(s) configured with higher layer parameter "aperiodicSRS-ResourceTrigger" set to 1 (SRS resource set(s) configured with higher layer parameter aperiodicSRS-ResourceTrigger set to 1) |
| 10 | SRS resource set(s) configured with higher layer parameter "aperiodicSRS-ResourceTrigger" set to 2 (SRS resource set(s) configured with higher layer parameter aperiodicSRS-ResourceTrigger set to 2) |
| 11 | SRS resource set(s) configured with higher layer parameter "aperiodicSRS-ResourceTrigger" set to 3 (SRS resource set(s) configured with higher layer parameter aperiodicSRS-ResourceTrigger set to 3) |

After receiving triggering signalling (for example, DCI) of the aperiodic SRS, the terminal device performs SRS transmission on an SRS resource set indicated by the triggering signalling. A slot offset (slot offset) between the triggering signalling and the SRS transmission is configured by using higher layer signalling (for example, RRC). A network device side indicates, to a terminal by using the higher layer signalling, a configuration parameter of each SRS resource set in advance, including a time-frequency resource, a sequence parameter, a power control parameter, and the like. In addition, for each SRS resource in the triggered SRS resource set, the terminal may further determine, by using spatial relation information of the resource, a transmission beam (or referred to as a spatial transmission filter) used to transmit an SRS on the resource. The information is configured for each SRS resource by using RRC.

3. An SRS resource includes: a quantity of antenna ports, a quantity of consecutive OFDM symbols, a time domain starting symbol location, and a frequency domain starting location. In terms of the quantity of antenna ports, an SRS in an existing NR system may be configured with 1, 2, or 4 ports. In an embodiment of this application, a configuration of three ports is further supported. In terms of the quantity of consecutive OFDM symbols, an SRS in an existing NR system may be configured with a plurality of OFDM symbols such as 1, 2, and 4 OFDM symbols. In an embodiment of this application, a configuration of three OFDM symbols is further supported. In terms of the time domain starting symbol location, an SRS in an existing NR system may be located on consecutive 1, 2, or 4 consecutive symbols in the last six symbols in a slot, or may be located on one or more consecutive symbols in any symbol in a slot according to a terminal capability (UE capability). In an embodiment of this application, a configuration of three consecutive symbols is further supported. In terms of the frequency domain starting location, a frequency domain starting location of an SRS in an existing NR system is related to a bandwidth part (BWP, Bandwidth Part). The BWP may be referred to as a "slice" of a radio resource, which may enable 5G to flexibly support various terminals in various scenarios. A same SRS resource may be repeatedly transmitted on a same sub-band on a plurality of OFDM symbols, or may be transmitted by frequency hopping between different sub-bands. The SRS resource may be transmitted on a plurality of OFDM such as 1, 2, or 4.

4. For an SRS resource set, in an existing NR system, a concept of an SRS resource is introduced, and a concept of an SRS resource set is also introduced. One SRS resource set may include a plurality of SRS resources with a same time domain type. A network device may configure one or more SRS resource sets for one terminal device, and one or more SRS resources may be configured for each SRS resource set.

5. If a quantity of ports of an SRS resource is A, the SRS resource is referred to as a similar name, for example, an SRS resource with A ports, an A-port SRS resource, an SRS resource with a port being A, or an SRS resource with a port quantity being A.

6. Supporting 3-port PUSCH transmission is referred to as a port (port), or may also be referred to as an antenna port (antenna port). Similarly, a port of an SRS resource is also applicable to different names: "SRS port(s) of SRS resource" or "antenna port(s) of SRS resource", "Port(s) of SRS resource", or "SRS port(s)".

7. An SRS resource for 3-port transmission is referred to as a first SRS resource, for example, which is referred to as that the first SRS resource has three ports, the first SRS resource has three antenna ports, or three ports in the first SRS resource are used to assist PUSCH transmission, or the like.

FIG. 3 is a schematic flowchart of an information configuration method 300 according to an embodiment of this application. Optionally, the method may be applied to the system shown in FIG. 1, but is not limited thereto. The method includes at least a portion of the following content.

S310. A terminal device receives first configuration information transmitted by a network device. The first configuration information is used to indicate a first SRS resource set, and the first SRS resource set includes one or more SRS resources. The one or more SRS resources include at least one first SRS resource for 3-port transmission.

It should be noted that the first configuration information is configuration information (supporting at least 3-port PUSCH transmission) related to an SRS signal and transmitted by the network device to the terminal device, and the first SRS resource may be one first SRS resource, or may be a plurality of first SRS resources.

According to embodiments of this application, 3-port information configuration is implemented, so as to implement uplink data transmission based on the 3-port information configuration.

In some examples, periodic SRS transmission is implemented based on the 3-port information configuration, and a resource type corresponding to the first SRS resource set may be configured as the periodic SRS transmission. The network device may transmit the first configuration information to the terminal device by using RRC signalling. Once receiving the first configuration information, the terminal device may complete configuration based on the first configuration information. For example, all SRS resources included in the first SRS resource set are used as SRS resources for 3-port transmission (namely, the first SRS resources), or some of SRS resources included in the first SRS resource set are used as SRS resources for 3-port transmission (namely, the first SRS resources). Then, an SRS signal is transmitted to the network device according to a specific period.

In some examples, semi-persistent SRS transmission is implemented based on the 3-port information configuration, and a resource type corresponding to the first SRS resource set may be configured as semi-persistent SRS transmission. The network device may transmit the first configuration information to the terminal device by using a medium access control control element (MAC CE). Once receiving the first configuration information, the terminal device may complete configuration based on the first configuration information. For example, all SRS resources included in the first SRS resource set are used as SRS resources for 3-port transmission (namely, the first SRS resources), or some of SRS resources included in the first SRS resource set are used as SRS resources for 3-port transmission (namely, the first SRS resources). Then, an SRS signal is transmitted to the network device according to a specific period.

In some examples, aperiodic SRS transmission is implemented based on the 3-port information configuration, and a resource type corresponding to the first SRS resource set may be configured as the aperiodic SRS transmission. The network device may transmit the first configuration information to the terminal device by using uplink or downlink DCI. Once receiving the first configuration information, the terminal device may complete configuration based on the first configuration information. For example, all SRS resources included in the first SRS resource set are used as SRS resources for 3-port transmission (namely, the first SRS resources), or some of SRS resources included in the first SRS resource set are used as SRS resources for 3-port transmission (namely, the first SRS resources). Then, an SRS signal is transmitted to the network device according to a specific period.

FIG. 4 is a schematic flowchart of an information configuration method 400 according to an embodiment of this application. Optionally, the method may be applied to the system shown in FIG. 1, but is not limited thereto. The method includes at least a portion of the following content.

S410. A terminal device receives first configuration information transmitted by a network device. The first configuration information is used to indicate a first SRS resource set, and the first SRS resource set includes one or more SRS resources. The one or more SRS resources include at least one first SRS resource for 3-port transmission.

It should be noted that the first configuration information is configuration information (supporting at least 3-port PUSCH transmission) related to an SRS signal and transmitted by the network device to the terminal device, and the first SRS resource may be one first SRS resource, or may be a plurality of first SRS resources.

S420: There is a mapping relationship between three ports of the first SRS resource and cyclic shift (cyclic shift) values.

In some examples, the mapping relationship may be in a form of a mapping table. Optionally, the mapping relationship may be configured by the network device, and then the network device transmits the configured mapping relationship to a terminal. The mapping relationship may alternatively be obtained according to a predefined rule.

In some examples, in a case that the mapping relationship meets $\alpha_i = \frac{2\pi}{N} \times k_i$, the cyclic shift values are determined, where $a_i$ is a cyclic shift value, $N$ is a maximum quantity of cyclic shifts, $k_i$ is a positive integer greater than or equal to 0, and $i$ is corresponding to three ports and $i = 0, 1, 2$.

It should be noted that this is only an example herein. Steps S410 and S420 may be used in combination with each other according to an actual requirement, or may be independently used. Details are not described again.

Optionally, in the embodiment of this application, three ports of the first SRS resource respectively have corresponding SRS sequences, and cyclic shifts means cyclic shifts corresponding to SRS sequences that correspond to respective ports. The meaning of a cyclic shift is similar in other parts of the specification, and is not described again.

The cyclic shifts may be determined based on indication information transmitted by the network device to the terminal device. For example, the indication information is transmitted to the terminal device by using DCI or RRC signalling or MAC CE signalling, and the terminal device reads the DCI or RRC signalling or MAC CE signalling, so as to acquire the cyclic shifts. The cyclic shifts means cyclic shifts (or referred to as cyclic displacement) corresponding to SRS sequences that correspond to respective ports of an SRS resource. For a specific description of the cyclic shift, reference may be made to TS 38.211 v16.6.0.

In some examples of determining the cyclic shifts in a case that $\alpha_i = \frac{2\pi}{N} \times k_i$ is met, optionally, each port has a corresponding SRS sequence. The cyclic shifts means cyclic shifts corresponding to SRS sequences that correspond to respective ports.

It should be noted that SRS sequences used by different ports of a same terminal device may be different SRS sequences, and SRS sequences corresponding to respective ports may be obtained by means of different cyclic shifts.

According to the embodiment of this application, 3-port SRS transmission is configured to support 3-port PUSCH transmission, and cyclic shifts respectively corresponding to three ports of a first SRS resource may be further obtained, so that a current hardware capability of a terminal device (for example, in a case in which the terminal device is a mobile phone, the mobile phone supports simultaneous operation of three transmit channels and has a possibility of supporting 3-port PUSCH transmission) may be fully used, thereby improving uplink data transmission efficiency. This also better controls manufacturing costs of the terminal device, and keeps the terminal device light and low power consumption in design.

Optionally, in the embodiment of this application, to avoid interference between ports of an SRS resource and ensure good orthogonality, selection of $N$ and a value of $k_i$ include at least the following solutions.

Solution 1: in a case that $N = 8$, a value of $k_i$ includes any one of manners as follows:

manner 1: $k_0 = (S)\ mod\ N,\ k_1 = (S + 2)\ mod\ N,$ and $k_2 = (S + 5)\ mod\ N;$
manner 2: $k_0 = (S)\ mod\ N,\ k_1 = (S + 2)\ mod\ N,$ and $k_2 = (S + 4)\ mod\ N;$
manner 3: $k_0 = (S)\ mod\ N,\ k_1 = (S + 3)\ mod\ N,$ and $k_2 = (S + 6)\ mod\ N;$

manner 4: $k_i = \left(S + \left\lfloor \frac{N \times i}{3} \right\rfloor\right) mod\ N$, where $\left\lfloor \frac{N \times i}{3} \right\rfloor$ indicates performing flooring

manner 5: $k_i = \left(S + \left\lceil \frac{N \times i}{3} \right\rceil\right) mod\ N$, where $\left\lceil \frac{N \times i}{3} \right\rceil$ indicates performing ceiling on $\frac{N \times i}{3}$; and

$$\text{manner 6: } k_i = \left(S + \frac{N \times i}{4}\right) mod\ N.$$

Herein *mod* denotes a modulo operation; and a value of *S* may be determined based on network configuration information, for example, *S* may be determined based on information in a network-configured RRC parameter "transmission comb (transmissionComb)", and for another example, *S* may be determined based on DCI signalling or MAC CE signalling of a network.

It should be noted that, when the manner 1 to manner 5 are used, a cyclic shift distance between different ports in a same SRS resource is as large as possible, so that orthogonality may be improved; when the manner 6 is used, workload of standardization may be reduced by using an existing formula, thereby improving processing efficiency.

An SRS may be transmitted on a same radio subframe and on a same RB set, may be transmitted on a same "comb (Comb)", or may be transmitted on different "combs". The network device may configure and indicate, by using signalling (such as RRC, a MAC CE, or DCI), a comb used by the SRS, and the configuration is performed by using a field transmissionComb or transmissionComb-ap. In other words, a reference signal sequence of the SRS is mapped every one or more subcarriers, thereby forming a "comb-shaped" frequency domain resource allocation. A frequency domain resource allocation corresponding to the comb is configured by using the signalling.

Optionally, in the embodiment of this application, the terminal device may determine, based on the received first indication information, the value of $k_i$ from any one of manners in the solution 1. Optionally, the first configuration information in the information configuration method illustrated in FIG. 3 and FIG. 4 includes the first indication information. The network device indicates a specific manner for determining a value of $k_i$, so that there is good flexibility, and a plurality of UEs may be allowed to share an SRS resource.

Solution 2: In a case that $N = 12$, a value of $k_i$ includes any one of manners as follows:

manner 1: $k_0 = (S)\ mod\ N$, $k_1 = (S + 4)\ mod\ N$, and $k_2 = (S + 8)\ mod\ N$;
manner 2: $k_0 = (S)\ mod\ N$, $k_1 = (S + 2)\ mod\ N$, and $k_2 = (S + 4)\ mod\ N$;
manner 3: $k_0 = (S)\ mod\ N$, $k_1 = (S + 3)\ mod\ N$, and $k_2 = (S + 6)\ mod\ N$;

$$\text{manner 4: } k_i = \left(S + \frac{N \times i}{3}\right) mod\ N; \text{ and}$$

$$\text{manner 5: } k_i = \left(S + \frac{N \times i}{4}\right) mod\ N.$$

Herein *mod* denotes a modulo operation; and a value of *S* may be determined based on network configuration information, for example, *S* may be determined based on information in a network-configured RRC parameter "transmission comb", and for another example, *S* may be determined based on DCI signalling or MAC CE signalling of a network.

It should be noted that, when the manner 1 to manner 4 are used, a cyclic shift distance between different ports in a same SRS resource is as large as possible, so that orthogonality may be improved; when the manner 5 is used, workload of standardization may be reduced by using an existing formula, thereby improving processing efficiency.

An SRS may be transmitted on a same radio subframe and on a same RB set, may be transmitted on a same "comb", or may be transmitted on different "combs". The network device may configure and indicate, by using signalling (such as RRC, a MAC CE, or DCI), a comb used by the SRS, and the configuration is performed by using a field transmissionComb or transmissionComb-ap. In other words, a reference signal sequence of the SRS is mapped every one or more subcarriers, thereby forming a "comb-shaped" frequency domain resource allocation. A frequency domain resource allocation corresponding to the comb is configured by using the signalling.

Optionally, in the embodiment of this application, the terminal device may determine, based on the received first indication information, a value of $k_i$ from any one of manners in the solution 1. Optionally, the first configuration information in the information configuration method illustrated in FIG. 3 and FIG. 4 includes the first indication information. The network device indicates a specific manner for determining a value of $k_i$, so that there is good flexibility, and a plurality of UEs may be allowed to share an SRS resource.

Solution 3: In a case that $N = 6$, a value of $k_i$ includes any one of manners as follows:

manner 1: $k_0 = (S)\ mod\ N$, $k_1 = (S + 2)\ mod\ N$, and $k_2 = (S + 4)\ mod\ N$;
manner 2: $k_0 = (S)\ mod\ N$, $k_1 = (S + 1)\ mod\ N$, and $k_2 = (S + 3)\ mod\ N$;
manner 3: $k_0 = (S)\ mod\ N$, $k_1 = (S + 2)\ mod\ N$, and $k_2 = (S + 5)\ mod\ N$;

$$\text{manner 4: } k_i = \left(S + \frac{N \times i}{3}\right) mod\ N;$$

manner 5: $k_i = \left(S + \left\lfloor \frac{N \times i}{4} \right\rfloor\right) \bmod N$, where $\left\lfloor \frac{N \times i}{4} \right\rfloor$ indicates performing flooring on $\frac{N \times i}{4}$;

manner 6: $k_i = \left(S + \left\lceil \frac{N \times i}{4} \right\rceil\right) \bmod N$, where $\left\lceil \frac{N \times i}{4} \right\rceil$ indicates performing ceiling on $\frac{N \times i}{4}$;

manner 7: $k_0 = (S) \bmod N$, $k_1 = (S + 3) \bmod N$, and $k_2 = (S + 0) \bmod N$; and

manner 8: $k_0 = (S) \bmod N$, $k_1 = (S + 0) \bmod N$, and $k_2 = (S + 3) \bmod N$.

Herein *mod* denotes a modulo operation; and a value of *S* may be determined based on network configuration information transmitted by the network device, for example, *S* may be determined based on information in a network-configured RRC parameter "transmission comb", and for another example, *S* may be determined based on DCI signalling or MAC CE signalling of a network.

It should be noted that, when the manner 1 to manner 8 are used, a cyclic shift distance between different ports in a same SRS resource is as large as possible, so that orthogonality may be improved.

An SRS may be transmitted on a same radio subframe and on a same RB set, may be transmitted on a same "comb", or may be transmitted on different "combs". The network device may configure and indicate, by using signalling (such as RRC, a MAC CE, or DCI), a comb used by the SRS, and the configuration is performed by using a field transmissionComb or transmissionComb-ap. In other words, a reference signal sequence of the SRS is mapped every one or more subcarriers, thereby forming a "comb-shaped" frequency domain resource allocation. A density of the frequency domain resource allocation corresponding to the comb is configured by using the signalling.

Optionally, in the embodiment of this application, the terminal device may determine, based on the received first indication information, the value of $k_i$ from any one of manners in the solution 1. Optionally, the first configuration information in the information configuration method illustrated in FIG. 3 and FIG. 4 includes the first indication information. The network device indicates a specific manner for determining a value of $k_i$, so that there is good flexibility, and a plurality of UEs may be allowed to share an SRS resource.

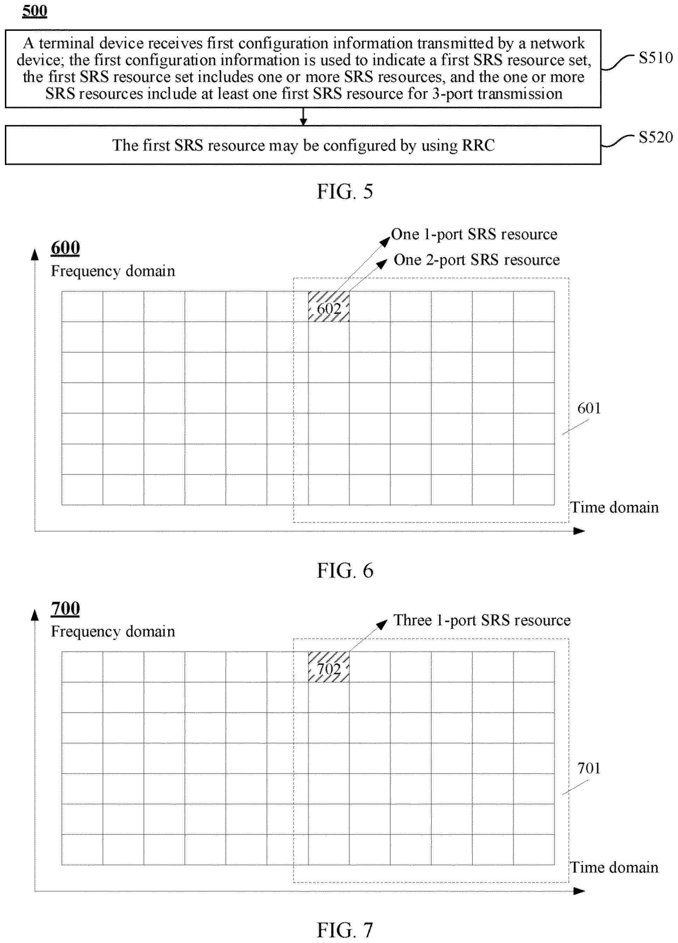

FIG. 5 is a schematic flowchart of an information configuration method 500 according to an embodiment of this application. Optionally, the method may be applied to the system shown in FIG. 1, but is not limited thereto. The method includes at least a portion of the following content.

S510. A terminal device receives first configuration information transmitted by a network device. The first configuration information is used to indicate a first SRS resource set, and the first SRS resource set includes one or more SRS resources. The one or more SRS resources include at least one first SRS resource for 3-port transmission.

It should be noted that the first configuration information is configuration information (supporting at least 3-port PUSCH transmission) related to an SRS signal and transmitted by the network device to the terminal device, and the first SRS resource may be one first SRS resource, or may be a plurality of first SRS resources.

S520. The first SRS resource may be configured by using RRC.

Optionally, in the embodiment of this application, that the first SRS resource is configured by using RRC includes: Each first SRS resource is corresponding to two or three SRS resources; or each first SRS resource is corresponding to three ports in one 4-port SRS resource.

It should be noted that, each first SRS resource being corresponding to two or three SRS resources is designed based on an existing 1-port SRS resource and an existing 2-port SRS resource, which may reduce workload of whole design and improve processing efficiency. Each first SRS resource being corresponding to three ports in one 4-port SRS resource is designed based on an existing 4-port SRS resource, which may reduce workload of whole design and improve processing efficiency.

In some examples, the first SRS resource is configured by using RRC, and at least one of the following RRC signalling structures may be used:

manner 1: the first SRS resource is configured by using a field (a field may also be referred to as a field) recorded as SRS-Resource in RRC signalling, for example, the first SRS resource is configured by using signalling RRC IE SRS-Resource; and

manner 2: the first SRS resource is configured by using a field (a field may also be referred to as a field) recorded as SRS-ResourceSet in RRC signalling.

Optionally, in the embodiment of this application, that each first SRS resource is corresponding to two SRS resources includes: Each first SRS resource is corresponding to one 1-port SRS resource and one 2-port SRS resource. FIG. 6 exemplarily shows a configuration manner 600 of a first SRS resource. One or more SRS resources are included in a region 601 where a first SRS resource set is located. The one or more SRS resources include at least one first SRS resource for 3-port transmission. The first SRS resource may be one first SRS resource, or may be a plurality of first SRS resources. In the figure, one first SRS resource 602 is used as an example for description. The first SRS resource 602 is corresponding to one 1-port SRS resource and one 2-port SRS resource. Transmission time-frequency resources corresponding to the first SRS resource 602 may alternatively be different. FIG. 6 is only used as an example, and a schematic diagram in which more time-frequency resources are occupied may also be directly extended. The following FIG. 7 to FIG. 9 are also similar, and details are not described again.

In some examples, the one 1-port SRS resource and the one 2-port SRS resource are located on a same symbol. For example, the one 1-port SRS resource and the one 2-port SRS resource are located on a same OFDM symbol, or the one 1-port SRS resource and the one 2-port SRS resource are located on a same SC-FDMA symbol.

Optionally, in the embodiment of this application, orthogonal frequency division multiplexing corresponds to a case in which transform precoding is not enabled in the TS 38.211, and single-carrier frequency division multiplexing corresponds to a case in which transform precoding is enabled in the TS 38.211 (OFDM corresponds to a case in which transform precoding is not enabled in the TS 38.211, and SC-FDMA corresponds to a case in which transform precoding is enabled in the TS 38.211).

Optionally, in the embodiment of this application, that each first SRS resource is corresponding to three SRS resources includes: Each first SRS resource is corresponding to three 1-port SRS resources. FIG. 7 exemplarily shows a configuration manner 700 of a first SRS resource. One or more SRS resources are included in a region 701 where a first SRS resource set is located. The one or more SRS resources include at least one first SRS resource used for 3-port transmission. The first SRS resource may be one first SRS resource, or may be a plurality of first SRS resources. In the figure, one first SRS resource 702 is used as an example for description. The first SRS resource 702 is corresponding to three 1-port SRS resources.

In some examples, the three 1-port SRS resources are on a same symbol. For example, the three 1-port SRS resources are located on a same OFDM symbol, or the three 1-port SRS resources are located on a same SC-FDMA symbol.

Optionally, in the embodiment of this application, orthogonal frequency division multiplexing corresponds to a case in which transform precoding is not enabled in the TS 38.211, and single-carrier frequency division multiplexing corresponds to a case in which transform precoding is enabled in the TS 38.211 (OFDM corresponds to a case in which transform precoding is not enabled in the TS 38.211, and SC-FDMA corresponds to a case in which transform precoding is enabled in the TS 38.211).

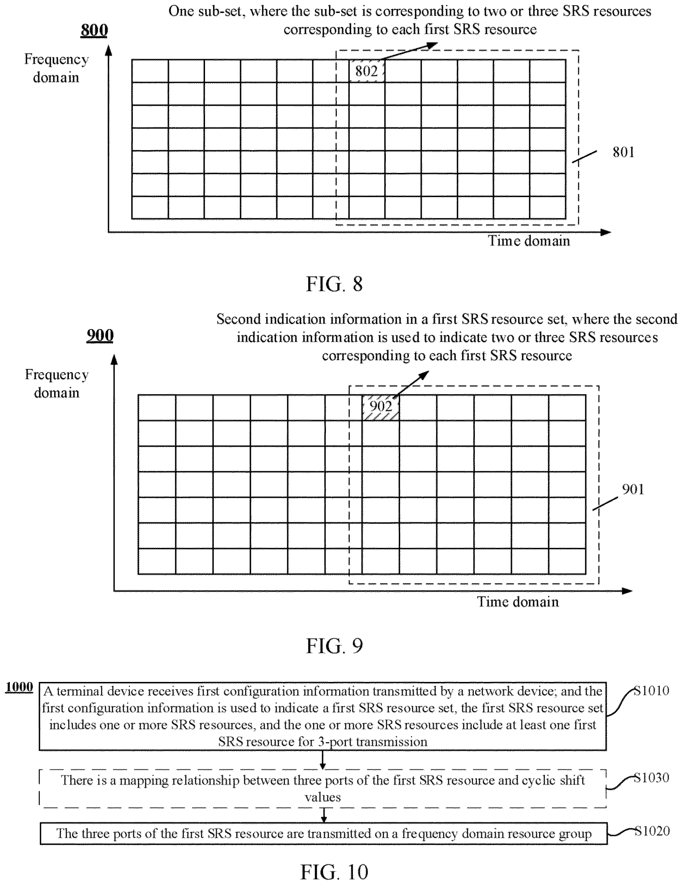

Optionally, in the embodiment of this application, that each first SRS resource is corresponding to two or three SRS resources includes: Each first SRS resource is corresponding to one sub-set (sub-set) in the first SRS resource set. The sub-set is corresponding to two or three SRS resources corresponding to each first SRS resource. FIG. 8 exemplarily shows a configuration manner 800 of a first SRS resource. One or more SRS resources are included in a region 801 where a first SRS resource set is located. The one or more SRS resources include at least one first SRS resource for 3-port transmission. The first SRS resource may be one first SRS resource, or may be a plurality of first SRS resources. In the figure, one first SRS resource 802 is used as an example for description. The first SRS resource 802 is corresponding to one sub-set in the first SRS resource set, and the sub-set is corresponding to two or three SRS resources corresponding to each first SRS resource. By changing configuration information of an SRS resource set, changes of a configuration structure of an SRS resource are reduced, so that consistency with an original SRS resource configuration may be maintained.

Optionally, in the embodiment of this application, the method further includes: receiving, by the terminal device, second indication information transmitted by a network device, where each first SRS resource is corresponding to the second indication information in the first SRS resource set. The second indication information is used to indicate two or three SRS resources corresponding to each first SRS resource.

Optionally, in the embodiment of this application, the first configuration information further includes the second indication information.

FIG. 9 exemplarily shows a configuration manner 900 of a first SRS resource. One or more SRS resources are included in a region 901 where a first SRS resource set is located. The one or more SRS resources include at least one first SRS resource for 3-port transmission. The first SRS resource may be one first SRS resource, or may be a plurality of first SRS resources. In the figure, one first SRS resource 902 is used as an example for description. The first SRS resource 902 is corresponding to second indication information in the first SRS resource set. The second indication information is used to indicate two or three SRS resources corresponding to each first SRS resource. By changing configuration information of an SRS resource set, changes of a configuration structure of an SRS resource are reduced, so that consistency with an original SRS resource configuration may be maintained.

Optionally, in the embodiment of this application, that each first SRS resource is corresponding to three ports in one 4-port SRS resource includes: Each first SRS resource is corresponding to an SRS resource of other ports different from a first port in the 4-port SRS resource. In other words, the first port of the 4-port SRS resource is not used for transmission. By using design of an existing 4-port SRS resource, workload of whole design may be reduced.

In some examples, a port number of the first port may be a port with the smallest SRS resource number or a port with the largest SRS resource number of the four ports. In some other examples, the port number of the first port may satisfy a sequence with number values sorted in descending order: $j_1$, $j_2$, $j_3$, and $j_4$, for example, $j_1$ is a port with the largest number and $j_4$ is a port with the smallest number. In this case, the first port is determined in any one of manners as follows:

manner 1: the first port is a port with a port number recorded as $j_4$ in the 4-port SRS resource;
manner 2: the first port is a port with a port number recorded as $j_1$ in the 4-port SRS resource;
manner 3: the first port is a port with a port number recorded as $j_3$ in the 4-port SRS resource; and
manner 4: the first port is a port with a port number recorded as $j_2$ in the 4-port SRS resource.

It should be noted that orthogonality between ports may be improved by using the manner 1 to manner 4.

Optionally, in the embodiment of this application, the method further includes: receiving, by a terminal device, third indication information transmitted by the network device, and determining, based on the third indication information, a port to be used by the first port from any one of the foregoing plurality of manners. The network device indicates a specific manner for determining a port to be used, which provides better flexibility, and an SRS resource between different UEs may be better shared in a dynamical manner.

Optionally, in the embodiment of this application, the method further includes: determining, by the terminal device according to a predefined rule, a port used by the first port from the any one of manners described above.

Optionally, in the embodiment of this application, the method further includes: using a cyclic shift manner corresponding to the 4-port SRS resource for a cyclic shift corresponding to the first SRS resource port, that is to say, in a case that the 4-port SRS resource is transmitted based on three ports, the three ports for transmission may use a cyclic shift manner same as that corresponding to existing four ports.

In some examples, the method further includes: receiving, by the terminal device, fourth indication information transmitted by the network device. The 4-port SRS resource is corresponding to the fourth indication information, and the fourth indication information is used to indicate that the 4-port SRS resource is to be transmitted based on three ports. Optionally, the fourth indication information and the foregoing third indication information may be same information, or may be transmitted by using a same RRC IE.

Optionally, in the embodiment of this application, the method further includes: receiving, by the terminal device, fifth indication information transmitted by the network device. The fifth indication information is used to indicate a second SRS resource, and the second SRS resource is one of the one or more first SRS resources in foregoing embodiments. Optionally, the first SRS resource set includes two or more SRS resources.

Optionally, in the embodiment of this application, the receiving, by the terminal device, fifth indication information transmitted by the network device includes: receiving, by the terminal device, the fifth indication information by using DCI. A format of the DCI includes a format DCI format 0_1 and/or a format DCI format 0_2.

Optionally, in the embodiment of this application, the receiving, by the terminal device, fifth indication information transmitted by the network device includes: receiving, by the terminal device, the fifth indication information by using signalling RRC IE rrc-ConfiguredUplinkGrant.

In some examples, the fifth indication information is included in the signalling RRC IE rrc-ConfiguredUplinkGrant, and the fifth indication information is transmitted by using an RRC parameter "srs-ResourceIndicator".

Optionally, in the embodiment of this application, the method further includes: determining, by the terminal device, a first precoding or a first TPMI. The first precoding or the first TPMI is corresponding to a second SRS resource (the second SRS resource may be a first SRS resource in first SRS resources in foregoing embodiments).

Optionally, in the embodiment of this application, the method further includes: transmitting, by the terminal device, uplink data (or a PUSCH). An antenna port used in uplink data transmission is the same as a port of the second SRS resource, that is, The UE shall transmit PUSCH using the same antenna port(s) as the SRS port(s) in the SRS resource.

FIG. 10 is a schematic flowchart of an information configuration method 1000 according to an embodiment of this application. Optionally, the method may be applied to the system shown in FIG. 1, but is not limited thereto. The method includes at least a portion of the following content.

S1010. A terminal device receives first configuration information transmitted by a network device. The first configuration information is used to indicate a first SRS resource set, and the first SRS resource set includes one or more SRS resources. The one or more SRS resources include at least one first SRS resource for 3-port transmission.

It should be noted that the first configuration information is configuration information (supporting at least 3-port PUSCH transmission) related to an SRS signal and transmitted by the network device to the terminal device, and the first SRS resource may be one first SRS resource, or may be a plurality of first SRS resources.

S1020. Three ports of the first SRS resource are transmitted on a frequency domain resource group.

In some examples, the three ports of the first SRS resource are transmitted on the frequency domain resource group in any one of manners as follows:

manner 1: a first port and a third port in the first SRS resource are transmitted on a first frequency domain resource group, and a second port is transmitted on a second frequency domain resource group;

manner 2: a first port and a second port are transmitted on a first frequency domain resource group, and a third port is transmitted on a second frequency domain resource group; and

manner 3: a first port is transmitted on a first frequency domain resource group, and a second port and a third port are transmitted on a second frequency domain resource group.

It should be noted that the first port may be determined based on a sequence of port numbers. For example, a port number of the first port may satisfy a sequence with number values sorted in descending order: $j_1$, $j_2$, $j_3$, and $j_4$, for example, $j_1$ is a port with the largest number and $j_4$ is a port with the smallest number. In this case, one port determining manner is as follows: the first port is corresponding to a port with the smallest port number (that is, the first port is a port with a port number recorded as $j_4$), the second port is corresponding to a port with the second smallest port number (that is, the second port is a port with the port number recorded as $j_3$), and the third port is corresponding to a port with the third smallest port number (that is, the third port is a port with the port number recorded as $j_2$); and another port determining manner is as follows: the first port is corresponding to a port with the largest port number (that is, the first port is a port with a port number recorded as $j_1$), the second port is corresponding to a port with the second largest port number (that is, the second port is a port with the port number recorded as $j_2$), and the third port is corresponding to a port with the third largest port number (that is, the second port is a port with the port number recorded as js).

Optionally, in the embodiment of this application, the method further includes that each of the first frequency domain resource group and the second frequency domain resource group is corresponding to one comb.

Optionally, in the embodiment of this application, the method further includes that: resources in the first frequency domain resource group are equally spaced in frequency domain, resources in the second frequency domain resource group are equally spaced in frequency domain, and there is no resource intersection between the first frequency domain resource group and the second frequency domain resource group.

In some examples, resources in the first (or the second) frequency domain resource group are equally spaced in frequency domain, for example, one resource element is selected from every Z resource elements (Resource element, RE) (Z may be 2, 4, 8, or the like). For example, RE#0, RE#4, and RE#8 in one resource block (Resource Block, RB) belong to one frequency domain resource group, and RE#2, RE#6, and RE#10 in one RB belong to another frequency domain resource group. For another example, RE#0, RE#2, RE#4, RE#6, RE#8, and RE#10 in one RB belong to one frequency domain resource group, and RE#1, RE#3, RE#5, RE#7, RE#9, and RE#11 in one RB belong to another frequency domain resource group. The RE is a unit in a resource grid, and is the smallest resource unit. For example, each RE may occupy one subcarrier in frequency domain and one OFDM symbol in time domain. In an NR system, the RB is defined only in frequency domain, for example, 12 consecutive subcarriers in frequency domain, and the RB is not specifically defined in time domain, thereby providing a lot of flexibility for scheduling in time domain.

Optionally, the embodiment of this application shown in FIG. 10 may further include the following step.

S1030: There is a mapping relationship between three ports of the first SRS resource and cyclic shift values.

For some examples of implementing S1030, reference may be made to the foregoing description of S420. Details are not described herein again.

The step S1030 may be performed before the step S1020, as long as the steps S1020 and 1030 are combined to use and fall within the protection scope of embodiments of this application.

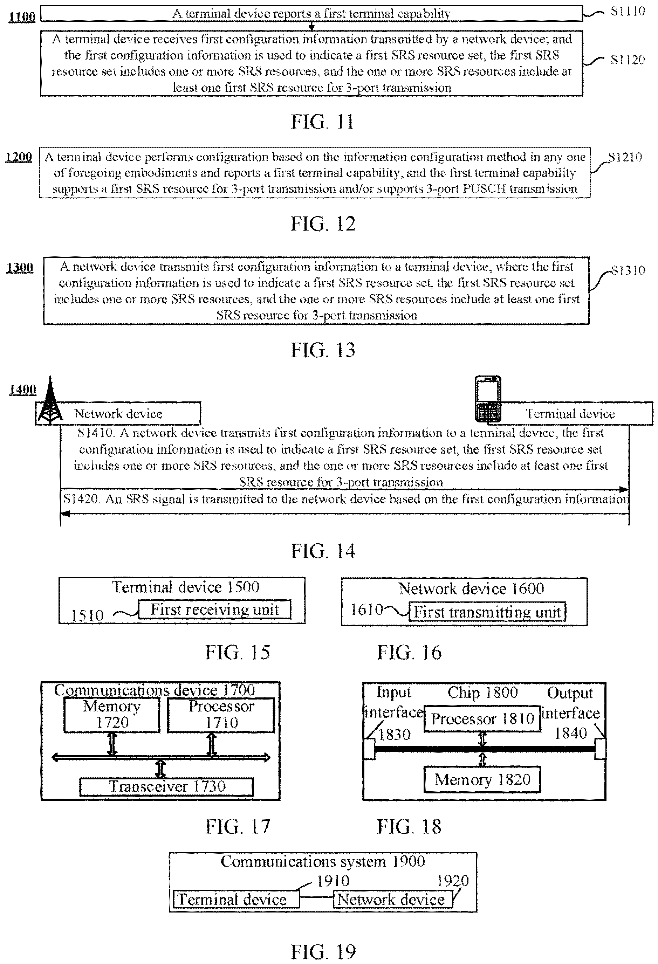

FIG. 11 is a schematic flowchart of an information configuration method 1100 according to an embodiment of this application. Optionally, the method may be applied to the system shown in FIG. 1, but is not limited thereto. The method includes at least a portion of the following content.

S1110. A terminal device reports a first terminal capability.

In some examples, the first terminal capability supports a first SRS resource for 3-port transmission and/or supports 3-port PUSCH transmission.

For descriptions of a port involved in the first SRS resource for 3-port transmission and/or 3-port PUSCH transmission, reference may be made to related port descriptions in the TS 38.211.

S1120. The terminal device receives first configuration information. The first configuration information is used to indicate a first SRS resource set, and the first SRS resource set includes one or more SRS resources. The one or more SRS resources include at least one first SRS resource for 3-port transmission.

It should be noted that the first configuration information is configuration information (supporting at least 3-port PUSCH transmission) related to an SRS signal and transmitted by the network device to the terminal device, and the first SRS resource may be one first SRS resource, or may be a plurality of first SRS resources.

In some examples, for the first terminal capability involved in S1110, the terminal device may report the first terminal capability by using RRC signalling or a MAC CE.

In some examples, the first terminal capability involved in S1110 includes any one of the following types.

Type 1: A capability (per band) independently reporting for different frequency bands (band), that is, different frequency bands may be used to independently report corresponding capabilities. Independently reporting by using different frequency bands may enable a terminal device to achieve greater flexibility. For example, the terminal device may support this function on a specific frequency band or some frequency bands, and do not support this function on another frequency band, so that more terminal devices may be allowed to support this new function.

Type 2: A capability of independently reporting (per band combination) for different frequency band combinations (band combination). Independently reporting by using different frequency band combinations may enable the terminal device to achieve greater flexibility. For example, the terminal device may not support this function on a specific frequency band combination, but support this function on another frequency band combination, so that more terminal devices may be allowed to support this new function.

Type 3: A capability of independently reporting for each frequency band in different frequency band combinations (per band per band combination), that is, frequency bands in different frequency band combinations may be used for independently reporting. Independently reporting by using different frequency band combinations may enable the terminal device to achieve greater flexibility. For example, the terminal device may not support this function on specific CA, but support this function on some bands in another CA combination, so that more terminal devices may be allowed to support this new function.

Type 4: A capability of independently reporting for each carrier on each frequency band in different frequency band combinations (per CC per band per band combination, or FSPC), that is, different carriers (CC) in different frequency bands in different frequency band combinations may be used for independently reporting. Different frequency band combinations are used for independently reporting, and different carriers on one frequency band may also be used for independently reporting, so that the terminal device may achieve greater flexibility, and more terminal devices may be allowed to support this new function.

Type 5: a capability of independently reporting for a frequency range (per FR), that is, different FRs may be used for independently reporting, for example, FR 1 and FR 2 may be used for independently reporting; and different frequency ranges are used for independently reporting, so that the terminal device may achieve greater flexibility, for example, the terminal device does not support this function at a low frequency (such as FR 1), but supports this function at a high frequency (such as FR 2), so that more terminal devices may be allowed to support this new function.

Type 6: A capability of independently reporting for a first terminal and being supporting on each frequency band (per UE), that is, if a UE reports the capability, the UE may support the capability on each frequency band, thereby reducing signalling overheads of the terminal device in reporting a terminal capability.

Based on the first configuration information in foregoing embodiments, the first configuration information may be transmitted in any one of the following manners:

> manner 1: the first configuration information is transmitted by using RRC signalling;
> manner 2: the first configuration information is transmitted by using MAC CE signalling; and
> manner 3: the first configuration information is transmitted by using DCI signalling.

Optionally, in the embodiment of this application, the method further includes that: the first SRS resource set corresponds to a codebook based PUSCH. For example, a field or a field in signalling RRC IE corresponding to the first SRS resource set is set as a codebook. For another example, a field (or field) named "usage" in the RRC IE corresponding to the first SRS resource set is set as a codebook.

Optionally, in the embodiment of this application, the method further includes that: the first SRS resource set is aperiodic, or semi-persistent, or periodic. For example, a resource type (resourceType) in the SRS-ResourceSet corresponding to the first SRS resource set is configured as one of aperiodic SRS transmission, semi-persistent SRS transmission, or periodic SRS transmission.

Optionally, in the embodiment of this application, the method further includes: all SRS resource included in the first SRS resource set, are used for 3-port transmission.

Optionally, in the embodiment of this application, the method further includes that ports of other SRS resources without belonging to the first SRS resource and different from all first SRS resources in the first SRS resource set are less than 3.

Optionally, in the embodiment of this application, the method further includes: receiving, by the terminal device, second configuration information, where the second configuration information is used to indicate that full power transmission is configured for uplink data transmission. For example, configuration of the full power transmission includes: configuration that a power value is a full power mode 2 (for example, fullpowerMode2), that is, a value of an RRC parameter ul-FullPowerTransmission is *"fullpowerMode2"*.

FIG. 12 is a schematic flowchart of a terminal reporting method 1200 according to an embodiment of this application. Optionally, the method may be applied to the system shown in FIG. 1, but is not limited thereto. The method includes at least a portion of the following content.

S1210. A terminal device performs configuration based on the information configuration method in any one of foregoing embodiments, and reports a first terminal capability. The first terminal capability supports a first SRS resource for 3-port transmission and/or supports 3-port PUSCH transmission.

FIG. 13 is a schematic flowchart of an information configuration method 1300 according to an embodiment of this application. Optionally, the method may be applied to the system shown in FIG. 1, but is not limited thereto. The method includes at least a portion of the following content.

S1310. A network device transmits first configuration information to a terminal device, where the first configuration information is used to indicate a first SRS resource set, and the first SRS resource set includes one or more SRS resources. The one or more SRS resources include at least one first SRS resource for 3-port transmission.

It should be noted that the first configuration information is configuration information (supporting at least 3-port PUSCH transmission) related to an SRS signal and transmitted by the network device to the terminal device, and the first SRS resource may be one first SRS resource, or may be a plurality of first SRS resources.

Optionally, the method may further include: receiving, by the network device, an SRS signal transmitted by the terminal device.

FIG. 14 is a schematic diagram of information interaction of an information configuration method 1400 according to an embodiment of this application. Optionally, the method may be applied to the system shown in FIG. 1, but is not limited thereto. The method includes at least a portion of the following content.

S 14 10. A network device transmits first configuration information to a terminal device, where the first configuration information is used to indicate a first SRS resource set, and the first SRS resource set includes one or more SRS resources. The one or more SRS resources include at least one first SRS resource for 3-port transmission.

S 1420. The terminal device receives the first configuration information, and transmits an SRS signal to the network device based on the first configuration information.

Optionally, in the embodiment of this application, there is a mapping relationship between three ports of the first SRS resource and cyclic shift values.

In some examples, the mapping relationship may be in a form of a mapping table. Optionally, the mapping relationship may be configured by the network device, and then the network device transmits the configured mapping relationship to a terminal. The mapping relationship may alternatively be obtained according to a predefined rule. The network device may transmit the mapping relationship by using DCI or MAC CE signalling or RRC signalling, that is, may indicate the cyclic shift value by using DCI or MAC CE signalling or RRC signalling.

In some examples, in a case that the mapping relationship meets $\alpha_i = \frac{2\pi}{N} \times k_i$, the cyclic shift values are determined, where $a_i$ is a cyclic shift value, $N$ is a maximum quantity of cyclic shifts, $k_i$ is a positive integer greater than or equal to 0, and $i$ is corresponding to three ports and $i = 0, 1, 2$.

For some examples related to "cyclic shift", reference may be made to the foregoing description in S420. Details are not described herein again. Optionally, in the embodiment of this application, the method further includes: transmitting, by the network device, higher layer signalling, and indicating resource configuration of the first SRS resource by using the higher layer signalling. Optionally, the higher layer signalling may be RRC signalling and/or MAC CE signalling.

In some examples, the network device transmits higher layer signalling, and indicates resource configuration of the first SRS resource by using the higher layer signalling, including indicating that the first SRS resource may be configured by using RRC.

Optionally, in the embodiment of this application, the indicating that the first SRS resource may be configured by using RRC includes:

Each first SRS resource is corresponding to two or three SRS resources; or each first SRS resource is corresponding to three ports in one 4-port SRS resource.

It should be noted that, each first SRS resource being corresponding to two or three SRS resources is designed based on an existing 1-port SRS resource and an existing 2-port SRS resource, which may reduce workload of whole design and improve processing efficiency. Each first SRS resource being corresponding to three ports in one 4-port SRS resource is designed based on an existing 4-port SRS resource, which may reduce workload of whole design and improve processing efficiency.

In some examples, the first SRS resource is configured by using RRC, and at least one of the following RRC signalling structures may be used:

manner 1: the first SRS resource is configured by using a field (a field may also be referred to as a field) recorded as SRS-Resource in RRC signalling, for example, the first SRS resource is configured by using signalling RRC IE SRS-Resource; and

manner 2: the first SRS resource is configured by using a field (a field may also be referred to as a field) recorded as SRS-ResourceSet in RRC signalling.

Optionally, in the embodiment of this application, the indicating that the first SRS resource may be configured by using RRC includes: transmitting, by the network device, second indication information, and indicating, by using the second indication information, that each first SRS resource is corresponding to two or three SRS resources.

In some examples, the transmitting, by the network device, second indication information, and indicating, by using the second indication information, that each first SRS resource is corresponding to two SRS resources includes: indicating that each first SRS resource is corresponding to one 1-port SRS resource and one 2-port SRS resource.

In some examples, the one 1-port SRS resource and the one 2-port SRS resource are located on a same symbol. For example, the one 1-port SRS resource and the one 2-port SRS resource are located on a same OFDM symbol; or the one 1-port SRS resource and the one 2-port SRS resource are located on a same SC-FDMA symbol.

In some examples, the transmitting, by the network device, second indication information, and indicating, by using the second indication information, that each first SRS resource is corresponding to three SRS resources includes: indicating that each first SRS resource is corresponding to three 1-port SRS resources.

In some examples, the three 1-port SRS resources are on a same symbol, for example, the three 1-port SRS resources are located on a same OFDM symbol; or the three 1-port SRS resources are located on a same SC-FDMA symbol.

In some examples, the transmitting, by the network device, second indication information, and indicating, by using the second indication information, that each first SRS resource is corresponding to two or three SRS resources includes: indicating that each first SRS resource is corresponding to one subset in the first SRS resource set, where the subset is corresponding to two or three SRS resources corresponding to each first SRS resource.

Optionally, in the embodiment of this application, the indicating that the first SRS resource may be configured by using RRC includes: indicating, by the network device, that each first SRS resource is corresponding to three ports in one 4-port SRS resource.

In some examples, each first SRS resource is corresponding to an SRS resource of other ports different from a first port in the 4-port SRS resource. In other words, the 4-port SRS resource is transmitted by using other ports except the first port.

Optionally, in the embodiment of this application, the method further includes: transmitting, by the network device, third indication information, and instructing, based on the third indication information, the terminal device to determine a port used by the first port from any one of manners, where a port number of the first port satisfies a sequence with number values sorted in descending order: $j_1$, $j_2$, $j_3$, and $j_4$, for example, $j_1$ is a port with the largest number and $j_4$ is a port with the smallest number, and a port of the first port is determined in the any one of manners as follows:

manner 1: the first port is a port with a port number recorded as $j_4$ in the 4-port SRS resource;
manner 2: the first port is a port with a port number recorded as $j_1$ in the 4-port SRS resource;
manner 3: the first port is a port with a port number recorded as $j_3$ in the 4-port SRS resource; and
manner 4: the first port is a port with a port number recorded as $j_2$ in the 4-port SRS resource.

Optionally, in the embodiment of this application, the method further includes: instructing, by the network device, the terminal device to determine, according to a predefined rule, a port used by the first port from the any one of manners described above.

Optionally, in the embodiment of this application, the method further includes: instructing, by the network device by using DCI, the terminal device to use a cyclic shift manner corresponding to the 4-port SRS resource for a cyclic shift corresponding to the first SRS resource port, that is to say, in a case that the 4-port SRS resource is transmitted based on three ports, the three ports for transmission may use a cyclic shift manner same as that corresponding to existing four ports.

Optionally, in the embodiment of this application, the method further includes: transmitting, by the network device, fourth indication information, where the fourth indication information indicates that the 4-port SRS resource is transmitted based on three ports.

Optionally, in the embodiment of this application, the fourth indication information and the foregoing third indication information may be same information, or may be transmitted by using a same RRC IE.

Optionally, in the embodiment of this application, part or all of the foregoing indication information (for example, the second indication information) may be transmitted by using the first configuration information, for example, the second indication information may be included in the first configuration information.

Optionally, in the embodiment of this application, the method further includes: transmitting, by the network device, fifth indication information. The fifth indication information is used to indicate a second SRS resource, and the second SRS resource is one of the one or more first SRS resources.

In some examples, the network device may transmit fifth indication information by using DCI, where the fifth indication information, a format of the DCI includes a format DCI format 0_1 and/or a format DCI format 0_2.

In some examples, the network device may transmit fifth indication information by using signalling RRC IE rrc-ConfiguredUplinkGrant, and the fifth indication information may be included in the signalling RRC IE rrc-ConfiguredUplinkGrant, for example, be transmitted by using an RRC parameter "srs-ResourceIndicator".

Optionally, in the embodiment of this application, the network device indicates, by using the DCI, that the three ports of the first SRS resource are transmitted in a frequency domain resource group.

In some examples, any one of the following manners may be used:

manner 1: a first port and a third port in the first SRS resource are transmitted on a first frequency domain resource group, and a second port is transmitted on a second frequency domain resource group;
manner 2: a first port and a second port are transmitted on a first frequency domain resource group, and a third port is transmitted on a second frequency domain resource group; and
manner 3: a first port is transmitted on a first frequency domain resource group, and a second port and a third port are transmitted on a second frequency domain resource group.

Optionally, in the embodiment of this application, the method further includes that each of the first frequency domain resource group and the second frequency domain resource group is corresponding to one comb.

Optionally, in the embodiment of this application, the method further includes that: resources in the first frequency domain resource group are equally spaced in frequency domain, resources in the second frequency domain resource group are equally spaced in frequency domain, and there is no resource intersection between the first frequency domain resource group and the second frequency domain resource group.

Optionally, in the embodiment of this application, the method further includes: receiving, by the network device, a first terminal capability, where the first terminal capability supports a first SRS resource for 3-port transmission and/or supports 3-port PUSCH transmission.

Optionally, in the embodiment of this application, the method further includes: receiving, by the network device, the first terminal capability by using RRC signalling or a MAC CE.

In some examples, the first terminal capability includes any one of the following types:

type 1: a capability of independently reporting for different frequency bands;
type 2: a capability of independently reporting for different frequency band combinations;
type 3: a capability of independently reporting for each frequency band in different frequency band combinations;
type 4: a capability of independently reporting for each carrier on each frequency band in different frequency band combinations;
type 5: a capability of independently reporting for a frequency band range; and
type 6: a capability of reporting for a first terminal and being supporting on each frequency band.

Optionally, in the embodiment of this application, the first configuration information may be transmitted in any one of the following manners:

manner 1: the first configuration information is transmitted by using RRC signalling;
manner 2: the first configuration information is transmitted by using MAC CE signalling; and
manner 3: the first configuration information is transmitted by using DCI signalling.

Optionally, in the embodiment of this application, the method further includes: The first SRS resource set corresponds to a codebook based PUSCH. For example, the network device instructs to set a field or a field in signalling RRC IE corresponding to the first SRS resource set as a codebook. For another example, a field (or field) named "usage" in the RRC IE corresponding to the first SRS resource set is set as a codebook.

Optionally, in the embodiment of this application, the method further includes: instructing, by the network device, to configure a resource type resourceType in SRS-ResourceSet corresponding to the first SRS resource set as one of aperiodic SRS transmission, semi-persistent SRS transmission, or periodic SRS transmission.

Optionally, in the embodiment of this application, the method further includes: indicating, by the network device, an SRS resource included in the first SRS resource set, and all SRS resources used for 3-port transmission.

Optionally, in the embodiment of this application, the method further includes: indicating, by the network device, that ports of other SRS resources without belonging to the first SRS resource and different from all first SRS resources in the first SRS resource set are less than 3.

Optionally, in the embodiment of this application, the method further includes: transmitting, by the network device, second configuration information, where the second configuration information is used to indicate that full power transmission is configured for uplink data transmission. For example, a power value is configured as a full power mode 2 (for example, *fullpowerMode2),* that is, a value of an RRC parameter ul-FullPowerTransmission is *"fullpowerMode2"* .

The following describes in detail the information configuration method provided in the foregoing embodiments of this application.

A terminal device receives first configuration information transmitted by a network device, where the first configuration information indicates a first SRS resource set. The first SRS resource set includes one or more SRS resources, which includes one SRS resource for 3-port transmission (denoted as a first SRS resource, where the first SRS resource has three ports, or three antenna ports, or three ports in the first SRS resource are used for transmission). For the sake of simplicity, a case of only one first SRS resource is described herein. Actually, there may be a plurality of first SRS resources.

The following examples may support various possibilities described in embodiments of this application, and details are not described again.

Example 1: The first SRS resource is configured by using RRC signalling SRS-Resource.

I. Case 1:

An indication of three ports is added to an existing RRC signalling SRS-Resource, for example, "ports3" is added to an alternative value of nrofSRS-Ports (shown in bold underline in Table 2). An example of a structure of the RRC signalling SRS-Resource signalling is as follows. This is only an example, another field (field) may be further added herein, and details are not described herein again. The same goes for each of the subsequent examples, which are only for illustration purposes.

```
SRS-Resource ::=                    SEQUENCE {
    srs-ResourceId                      SRS-ResourceId,
    nrofSRS-Ports                       ENUMERATED {port1, ports2, ports4, ports3},
    ptrs-PortIndex                      ENUMERATED {n0, n1 }
OPTIONAL,      -- Need R
    transmissionComb                        CHOICE {
        n2                                      SEQUENCE {
            combOffset-n2                           INTEGER (0..1),
            cyclicShift-n2                          INTEGER (0..7)
        },
        n4                                      SEQUENCE {
            combOffset-n4                           INTEGER (0..3),
            cyclicShift-n4                          INTEGER (0..11)
        }
    },
    resourceMapping                         SEQUENCE {
        startPosition                           INTEGER (0..5),
        nrofSymbols                             ENUMERATED {n1, n2, n4},
        repetitionFactor                        ENUMERATED {n1, n2, n4}
    },
    freqDomainPosition                  INTEGER (0..67),
    freqDomainShift                     INTEGER (0..268),
    freqHopping                             SEQUENCE {
        c-SRS                                   INTEGER (0..63),
        b-SRS                                   INTEGER (0..3),
        b-hop                                   INTEGER (0..3)
    },
    groupOrSequenceHopping              ENUMERATED { neither, groupHopping,
sequenceHopping },
    resourceType                            CHOICE {
        aperiodic                               SEQUENCE {
            ...
        },
```

```
        semi-persistent                          SEQUENCE {
            periodicityAndOffset-sp                     SRS-PeriodicityAndOffset,

            ...

        },
        periodic                                 SEQUENCE {
            periodicityAndOffset-p                      SRS-PeriodicityAndOffset,

            ...

        }
    },
    sequenceId                               INTEGER (0..1023),
    spatialRelationInfo                      SRS-SpatialRelationInfo
OPTIONAL,     -- Need R

    ...,

    [[
    resourceMapping-r16                      SEQUENCE {
        startPosition-r16                        INTEGER (0..13),
        nrofSymbols-r16                             ENUMERATED {n1, n2, n4},
        repetitionFactor-r16                        ENUMERATED {n1, n2, n4}
    }
OPTIONAL      -- Need R
    ]]


}
```

Table 2

II. Case 2:

An indication of three ports is added to an existing RRC signalling SRS-Resource, for example, a new field is added to the existing RRC signalling SRS-Resource, which is represented by port3Indicator. The newly added field may have different locations in RRC signalling. This example provides only one case. A case of another location may be directly obtained by means of extension, and details are not described again. Similar processing is also performed in another embodiment. Square brackets [[]] may alternatively be omitted, which is similar in another embodiment, and details are not described again.

- A new field is added to an existing RRC signalling SRS-Resource.
- This new field is optional.
- If the port3Indicator is configured in the new field, or a first value is configured, or a terminal device has been notified of the port3Indicator configured in the new field, the terminal device ignores the existing field: nrofSRS-Ports (shown in bold underline in Table 3).

The new field may be named nrofSRS-Ports-XX (XX denotes a mark, for example, may be r18, r19, Ex, ex, or the like, which is not limited), and an alternative value of the new field includes "ports3" (shown in bold underline in Table 3). The following is an example of a structure of corresponding RRC signalling SRS-Resource. For the sake of simplicity, only one location arrangement of the new field is provided herein. Actually, a specific location of the new field may be different from that in the example, for example, may be in existing [[]]. Examples are not provided herein. Other examples are the same, and details are not described again.

| SRS-Resource ::= | SEQUENCE { |
|---|---|
| srs-ResourceId | SRS-ResourceId, |
| **nrofSRS-Ports** | **ENUMERATED {port1, ports2,** |
| **ports4},** | |
| ptrs-PortIndex | ENUMERATED {n0, n1 } |
| OPTIONAL,    -- Need R | |
| transmissionComb | CHOICE { |
|   n2 | SEQUENCE { |
|     combOffset-n2 | INTEGER (0..1), |
|     cyclicShift-n2 | INTEGER (0..7) |
|   }, | |
|   n4 | SEQUENCE { |
|     combOffset-n4 | INTEGER (0..3), |
|     cyclicShift-n4 | INTEGER (0..11) |
|   } | |
| }, | |
| resourceMapping | SEQUENCE { |
|   startPosition | INTEGER (0..5), |
|   nrofSymbols | ENUMERATED {n1, n2, n4}, |
|   repetitionFactor | ENUMERATED {n1, n2, n4} |
| }, | |
| freqDomainPosition | INTEGER (0..67), |
| freqDomainShift | INTEGER (0..268), |
| freqHopping | SEQUENCE { |
|   c-SRS | INTEGER (0..63), |
|   b-SRS | INTEGER (0..3), |

```
        b-hop                           INTEGER (0..3)
    },
    groupOrSequenceHopping          ENUMERATED { neither, groupHopping,
sequenceHopping },
    resourceType                    CHOICE {
        aperiodic                       SEQUENCE {

            ...

        },
        semi-persistent                 SEQUENCE {
            periodicityAndOffset-sp         SRS-PeriodicityAndOffset,

            ...

        },
        periodic                        SEQUENCE {
            periodicityAndOffset-p          SRS-PeriodicityAndOffset,

            ...

        }
    },
    sequenceId                      INTEGER (0..1023),
    spatialRelationInfo             SRS-SpatialRelationInfo
OPTIONAL,     -- Need R

    ...,
    [[
    resourceMapping-r16             SEQUENCE {
        startPosition-r16               INTEGER (0..13),
        nrofSymbols-r16                 ENUMERATED {n1, n2, n4},
        repetitionFactor-r16            ENUMERATED {n1, n2, n4}
    }
OPTIONAL     -- Need R
    ]]
    [[
```

| **nrofSRS-Ports-XX** | **ENUMERATED { ports3},   OPTIONAL** |
|---|---|

```
    ]]


}
```

Table 3

In another implementation, if the new field is configured as a first value, for example, enabled (for example, shown in bold underline in Table 4), a terminal ignores an existing field: nrofSRS-Ports (shown in bold underline in Table 4). For example, the following is an example of a structure of corresponding RRC signalling SRS-Resource.

```
SRS-Resource ::=                        SEQUENCE {
    srs-ResourceId                          SRS-ResourceId,
    nrofSRS-Ports                           ENUMERATED {port1, ports2,
ports4},
    ptrs-PortIndex                          ENUMERATED {n0, n1 }
OPTIONAL,     -- Need R
    transmissionComb                        CHOICE {
        n2                                      SEQUENCE {
            combOffset-n2                           INTEGER (0..1),
            cyclicShift-n2                          INTEGER (0..7)
        },
        n4                                      SEQUENCE {
            combOffset-n4                           INTEGER (0..3),
            cyclicShift-n4                          INTEGER (0..11)
        }
    },
    resourceMapping                         SEQUENCE {
        startPosition                           INTEGER (0..5),
        nrofSymbols                             ENUMERATED {n1, n2, n4},
        repetitionFactor                        ENUMERATED {n1, n2, n4}
    },
    freqDomainPosition                      INTEGER (0..67),
    freqDomainShift                         INTEGER (0..268),
    freqHopping                             SEQUENCE {
        c-SRS                                   INTEGER (0..63),
        b-SRS                                   INTEGER (0..3),
        b-hop                                   INTEGER (0..3)
    },
    groupOrSequenceHopping                  ENUMERATED { neither, groupHopping,
sequenceHopping },
    resourceType                            CHOICE {
```

```
            aperiodic                           SEQUENCE {

                ...

            },
            semi-persistent                     SEQUENCE {
                periodicityAndOffset-sp                 SRS-PeriodicityAndOffset,

                ...

            },
            periodic                            SEQUENCE {
                periodicityAndOffset-p                  SRS-PeriodicityAndOffset,

                ...

            }
        },
        sequenceId                          INTEGER (0..1023),
        spatialRelationInfo                 SRS-SpatialRelationInfo
OPTIONAL,      -- Need R

        ...,
        [[
        resourceMapping-r16                 SEQUENCE {
            startPosition-r16                   INTEGER (0..13),
            nrofSymbols-r16                         ENUMERATED {n1, n2, n4},
            repetitionFactor-r16                    ENUMERATED {n1, n2, n4}
        }
OPTIONAL       -- Need R
        ]]
        [[
            port3Indicator                  ENUMERATED { enabled },   OPTIONAL
        ]]


}
```

Table 4

III. Case 3:

New signalling is introduced into RRC signalling, for example, is denoted as SRS-Resource-XX, where XX denotes a mark, for example, may be r18, r19, Ex, ex, or the like, which is not limited, and the signalling includes at least the following information:

- an SRS resource ID;
- SRS port indication information, where an alternative value includes at least 3 ports, such as "ports3" (shown in bold underline in Table 5);
- a transmission comb (transmission comb) information;
- frequency domain resource allocation information; and
- time domain resource allocation information.

An example of a structure of the new RRC signalling is shown in Table 6, where type represents an alternative value type of the field resourceIndicator (shown in bold in Table 6). It should be noted that some of the following fields may be omitted, or their locations may be changed, or a new field may be added, which is not limited.

```
SRS-Resource-XX ::=                    SEQUENCE {

    srs-ResourceId                     SRS-ResourceId,

    nrofSRS-Ports                      ENUMERATED {ports3},


    transmissionComb                   CHOICE {

        n2                             SEQUENCE {

            combOffset-n2                  INTEGER (0..1),

            cyclicShift-n2                 INTEGER (0..7)

        },

        n4                             SEQUENCE {

            combOffset-n4                  INTEGER (0..3),

            cyclicShift-n4                 INTEGER (0..11)

        }

    },

    freqDomainPosition                 INTEGER (0..67),

    freqDomainShift                    INTEGER (0..268),

    freqHopping                        SEQUENCE {

        c-SRS                              INTEGER (0..63),

        b-SRS                              INTEGER (0..3),

        b-hop                              INTEGER (0..3)

    },

    groupOrSequenceHopping             ENUMERATED { neither, groupHopping,
sequenceHopping },

    resourceType                       CHOICE {

        aperiodic                          SEQUENCE {

            ...
```

```
        },
        semi-persistent              SEQUENCE {
            periodicityAndOffset-sp              SRS-PeriodicityAndOffset,

            ...
        },
        periodic                     SEQUENCE {
            periodicityAndOffset-p              SRS-PeriodicityAndOffset,

            ...
        }
    },
    sequenceId                   INTEGER (0..1023),
    spatialRelationInfo          SRS-SpatialRelationInfo
OPTIONAL,     -- Need R
    resourceMapping              SEQUENCE {
        startPosition            INTEGER (0..13),
        nrofSymbols                  ENUMERATED {n1, n2, n4},
        repetitionFactor             ENUMERATED {n1, n2, n4}
    }


}
```

<div align="center">Table 5</div>

IV. Case 4:

New signalling is introduced into RRC signalling, for example, is denoted as SRS-Resource-XX, where XX denotes a mark, for example, may be r18, r19, Ex, ex, or the like, which is not limited, and the signalling includes at least the following information:

- an SRS resource ID;
- SRS resource indication information (denoted as resourceIndicator), where the indication information indicates a plurality of 1-port SRS resources and/or 2-port SRS resources;
- optionally, three 1-port SRS resources may be indicated; and
- optionally, one 1-port SRS resource and one 2-port SRS resource may be indicated.

An example of a structure of the new RRC signalling is shown in Table 6, where type represents an alternative value type of the field resourceIndicator (shown in bold in Table 6), for example, may be indicate an ID of a plurality of SRS resources.

- For example, type may be a SEQUENCE structure, and indicates an ID of an SRS resource.

| SRS-Resource-XX ::= | SEQUENCE { |
|---|---|
| srs-ResourceId | SRS-ResourceId, |
| resourceIndicator | type |
| } | |

Table 6

Example 2

A first SRS resource is corresponding to a plurality of 2-port SRS resources or three SRS resources. In existing RRC signalling SRS-ResourceSet, a new field (denoted as resourceIDList2) is added.

- This new field is optional (Optional).
- Type: indicating a type of an alternative value of this field.
- Type may be a SEQUENCE structure.

resourceIDList2 (shown in bold underline in Table 7) may indicate one or more elements.

- Option 1: Each element indicates a plurality of SRS resources.
- Optionally, each element indicates one 1-port SRS resource and one 2-port SRS resource.
- Optionally, each element indicates three 1-port SRS resources.
- Optionally, when resourceIDList2 is configured, or the terminal device is notified of the field, a terminal ignores an existing field: srs-ResourceIdList (as shown in bold in Table 7).
- Option 2: Each element indicates one SRS resource set (which is actually equivalent to one sub-set).
- Optionally, each element indicates that one SRS resource set includes one 1-port SRS resource and one 2-port SRS resource.
- Optionally, each element indicates that one SRS resource set includes three 1-port SRS resources.
- Optionally, when resourceIDList2 is configured, or the terminal device is notified of the field, the terminal device ignores an existing field: srs-ResourceIdList (as shown in bold in Table 7).

| SRS-ResourceSet ::= | SEQUENCE { |
|---|---|
| srs-ResourceSetId | SRS-ResourceSetId, |
| **srs-ResourceIdList** | SEQUENCE (SIZE(1..maxNrofSRS-ResourcesPerSet)) OF |

```
SRS-ResourceId       OPTIONAL, -- Cond Setup
    resourceType                          CHOICE {
        aperiodic                             SEQUENCE {
            aperiodicSRS-ResourceTrigger              INTEGER (1..maxNrofSRS-
TriggerStates-1),
            csi-RS                                    NZP-CSI-RS-ResourceId
OPTIONAL, -- Cond NonCodebook
            slotOffset                                INTEGER (1..32)
OPTIONAL, -- Need S

            ...,
            [[
            aperiodicSRS-ResourceTriggerList     SEQUENCE (SIZE(1..maxNrofSRS-
TriggerStates-2))

                                                      OF INTEGER (1..maxNrofSRS-
TriggerStates-1)       OPTIONAL    -- Need M
            ]]
        },
        semi-persistent                       SEQUENCE {
            associatedCSI-RS                          NZP-CSI-RS-ResourceId
OPTIONAL, -- Cond NonCodebook
            ...
        },
        periodic                              SEQUENCE {
            associatedCSI-RS                          NZP-CSI-RS-ResourceId
OPTIONAL, -- Cond NonCodebook
            ...
        }
    },
    usage             ENUMERATED {beamManagement, codebook, nonCodebook,
antennaSwitching},
    alpha                         Alpha
OPTIONAL, -- Need S
    p0                                        INTEGER (-202..24)
OPTIONAL, -- Cond Setup
    pathlossReferenceRS                       PathlossReferenceRS-Config
```

```
OPTIONAL, -- Need M
        srs-PowerControlAdjustmentStates          ENUMERATED { sameAsFci2,
separateClosedLoop}                               OPTIONAL, -- Need S
        ...,
        [[
        pathlossReferenceRSList-r16               SetupRelease { PathlossReferenceRSList-r16}
OPTIONAL    -- Need M
]]
resourceIDList2                                   type,   OPTIONAL,
}
```

Table 7

Example 3

A first SRS resource is corresponding to one 4-port SRS resource, and the 4-port SRS resource is configured by using existing RRC signalling.

- The 4-port SRS resource is corresponding to fourth indication information, and the fourth indication information is used to indicate that the 4-port SRS resource is to be transmitted based on three ports.
- optionally, RRC configuration signalling of the 4-port SRS resource includes fourth indication information (denoted as SthIndication, refer to following Case 1 of an example of RRC signalling).

In this case, for SRS ports of the 4-port SRS resource:

- optionally, SRS ports 1000, 1001, and 1002 are used for SRS transmission;
- optionally, SRS ports 1001, 1002, and 1003 are used for SRS transmission;
- optionally, SRS ports 1000, 1001, and 1003 are used for SRS transmission;
- optionally, SRS ports 1000, 1002, and 1003 are used for SRS transmission;
- optionally, an SRS port p_idx is not used for SRS transmission, for example, p_idx is determined based on third indication information (may exist together with fourth indication information); and
- optionally, the RRC configuration signalling of the 4-port SRS resource includes the fourth indication information (denoted as 6thIndication, refer to following Case 2 of an example of RRC signalling).

It should be noted that the following Case 1 of Example 3 and Case 2 of Example 3 may alternatively be combined for use.

I. Case 1:

RRC configuration signalling of a 4-port SRS resource includes fourth indication information (denoted as SthIndication, as shown in bold underline in Table 8 for RRC signalling).

- This is an optional field (optional).
- Type: indicating a type of an alternative value of the field.
- This new field may be configured only when a value of nrofSRS-Ports (shown in bold underline in Table 8) is ports4.

```
SRS-Resource ::=                         SEQUENCE {
    srs-ResourceId                           SRS-ResourceId,
    nrofSRS-Ports                               ENUMERATED {port1, ports2, ports4},
    ptrs-PortIndex                           ENUMERATED {n0, n1 }
OPTIONAL,     -- Need R
    transmissionComb                            CHOICE {
        n2                                          SEQUENCE {
            combOffset-n2                               INTEGER (0..1),
            cyclicShift-n2                              INTEGER (0..7)
        },
        n4                                          SEQUENCE {
            combOffset-n4                               INTEGER (0..3),
            cyclicShift-n4                              INTEGER (0..11)
        }
    },
    resourceMapping                          SEQUENCE {
        startPosition                            INTEGER (0..5),
        nrofSymbols                                 ENUMERATED {n1, n2, n4},
        repetitionFactor                            ENUMERATED {n1, n2, n4}
    },
    freqDomainPosition                       INTEGER (0..67),
    freqDomainShift                          INTEGER (0..268),
    freqHopping                              SEQUENCE {
        c-SRS                                       INTEGER (0..63),
        b-SRS                                       INTEGER (0..3),
        b-hop                                       INTEGER (0..3)
    },
    groupOrSequenceHopping               ENUMERATED { neither, groupHopping,
sequenceHopping },
    resourceType                                CHOICE {
```

```
        aperiodic                              SEQUENCE {

            ...

        },

        semi-persistent                        SEQUENCE {

            periodicityAndOffset-sp                SRS-PeriodicityAndOffset,

            ...

        },

        periodic                               SEQUENCE {

            periodicityAndOffset-p                 SRS-PeriodicityAndOffset,

            ...

        }

    },

    sequenceId                             INTEGER (0..1023),

    spatialRelationInfo                    SRS-SpatialRelationInfo

OPTIONAL,     -- Need R

    ...,

    [[

    resourceMapping-r16                    SEQUENCE {

        startPosition-r16                      INTEGER (0..13),

        nrofSymbols-r16                        ENUMERATED {n1, n2, n4},

        repetitionFactor-r16                   ENUMERATED {n1, n2, n4}

    }

OPTIONAL      -- Need R

    ]]

    [[

    5thIndication                          type, OPTIONAL,

    ]]


}
```

Table 8

II. Case 2:

RRC configuration signalling of a 4-port SRS resource includes fourth indication information (denoted as 6thIndication, as shown in bold underline in Table 9 for RRC signalling).

- This is an optional field (optional).
- Type: indicating a type of an alternative value of the field.
- This new field may be configured only when a value of nrofSRS-Ports (shown in bold underline in Table 9) is ports4.

(There may be one or more of the following options.)

- Optionally, if the 6thIndication indicates a first value, a port 1000 is not used for SRS transmission.

- Optionally, if the 6thIndication indicates a second value, a port 1001 is not used for SRS transmission.

- Optionally, if the 6thIndication indicates a third value, a port 1002 is not used for SRS transmission.

- Optionally, if the 6thIndication indicates a fourth value, a port 1003 is not used for SRS transmission.

```
SRS-Resource ::=                          SEQUENCE {
    srs-ResourceId                            SRS-ResourceId,
    nrofSRS-Ports                               ENUMERATED {port1, ports2, ports4},
    ptrs-PortIndex                            ENUMERATED {n0, n1 }
OPTIONAL,      -- Need R
    transmissionComb                          CHOICE {
        n2                                        SEQUENCE {
            combOffset-n2                             INTEGER (0..1),
            cyclicShift-n2                            INTEGER (0..7)
        },
        n4                                        SEQUENCE {
            combOffset-n4                             INTEGER (0..3),
            cyclicShift-n4                            INTEGER (0..11)
        }
    },
    resourceMapping                           SEQUENCE {
        startPosition                             INTEGER (0..5),
        nrofSymbols                                 ENUMERATED {n1, n2, n4},
        repetitionFactor                          ENUMERATED {n1, n2, n4}
    },
    freqDomainPosition                        INTEGER (0..67),
    freqDomainShift                           INTEGER (0..268),
    freqHopping                               SEQUENCE {
        c-SRS                                       INTEGER (0..63),
```

```
        b-SRS                           INTEGER (0..3),
        b-hop                           INTEGER (0..3)
    },
    groupOrSequenceHopping          ENUMERATED { neither, groupHopping,
sequenceHopping },
    resourceType                    CHOICE {
        aperiodic                       SEQUENCE {

            ...
        },
        semi-persistent                 SEQUENCE {
            periodicityAndOffset-sp         SRS-PeriodicityAndOffset,

            ...
        },
        periodic                        SEQUENCE {
            periodicityAndOffset-p          SRS-PeriodicityAndOffset,

            ...
        }
    },
    sequenceId                      INTEGER (0..1023),
    spatialRelationInfo             SRS-SpatialRelationInfo
OPTIONAL,     -- Need R
    ...,
    [[
    resourceMapping-r16             SEQUENCE {
        startPosition-r16               INTEGER (0..13),
        nrofSymbols-r16                 ENUMERATED {n1, n2, n4},
        repetitionFactor-r16            ENUMERATED {n1, n2, n4}
    }
OPTIONAL       -- Need R
    ]]
    [[
    6thIndication                   type OPTIONAL,
    ]]


}
```

Table 9

It should be noted that the foregoing examples may be described with reference to various possibilities in foregoing embodiments of this application, and details are not described herein again.

FIG. 15 is a schematic block diagram of a terminal device 1500 according to an embodiment of this application. The terminal device 1500 may include a first receiving unit 1510, configured to receive first configuration information. The first configuration information is used to indicate a first SRS resource set, the first SRS resource set includes one or more SRS resources, and the one or more SRS resources include at least one first SRS resource for 3-port transmission.

Optionally, in the embodiment of this application, there is a mapping relationship between three ports of the first SRS resource and cyclic shift values.

Optionally, in the embodiment of this application, in a case that the mapping relationship meets $\alpha_i = \frac{2\pi}{N} \times k_i$, the cyclic shift values are determined, where $a_i$ is a cyclic shift value, $N$ is a maximum quantity of cyclic shifts, $k_i$ is a positive integer greater than or equal to 0, and $i$ is corresponding to three ports and $i$ = 0, 1, 2.

Optionally, each port has a corresponding SRS sequence. The cyclic shift means cyclic shifts corresponding to SRS sequences that correspond to respective ports.

Optionally, in the embodiment of this application, in a case that $N$ = 8, a value of $k_i$ includes any one of manners as follows:

manner 1: $k_0$ = (S) mod N, $k_1$ = (S + 2) mod N, and $k_2$ = (S + 5) mod N;
manner 2: $k_0$ = (S) mod N, $k_1$ = (S + 2) mod N, and $k_2$ = (S + 4) mod N;
manner 3: $k_0$ = (S) mod N, $k_1$ = (S + 3) mod N, and $k_2$ = (S + 6) mod N;

manner 4: $k_i = \left(S + \left\lfloor \frac{N \times i}{3} \right\rfloor\right) \bmod N$, where $\left\lfloor \frac{N \times i}{3} \right\rfloor$ indicates performing flooring on $\frac{N \times i}{3}$;

manner 5: $k_i = \left(S + \left\lceil \frac{N \times i}{3} \right\rceil\right) \bmod N$, where $\left\lceil \frac{N \times i}{3} \right\rceil$ indicates performing ceiling on $\frac{N \times i}{3}$; and

manner 6: $k_i = \left(S + \frac{N \times i}{4}\right) \bmod N$.

Herein mod indicates a modulo operation, and a value of the S is determined based on network configuration information.

Optionally, in the embodiment of this application, in a case that $N$ = 12, a value of $k_i$ includes any one of manners as follows:

manner 1: $k_0$ = (S) mod N, $k_1$ = (S + 4) mod N, and $k_2$ = (S + 8) mod N;
manner 2: $k_0$ = (S) mod N, $k_1$ = (S + 2) mod N, and $k_2$ = (S + 4) mod N;
manner 3: $k_0$ = (S) mod N, $k_1$ = (S + 3) mod N, and $k_2$ = (S + 6) mod N;

manner 4: $k_i = \left(S + \frac{N \times i}{3}\right) \bmod N$; and

manner 5: $k_i = \left(S + \frac{N \times i}{4}\right) \bmod N$.

Herein mod indicates a modulo operation, and a value of the S is determined based on network configuration information.

Optionally, in the embodiment of this application, in a case that $N$ = 6, a value of $k_i$ includes any one of manners as follows:

manner 1: $k_0$ = (S) modN, $k_1$ = (S + 2) mod N, and $k_2$ = (S + 4) mod N;
manner 2: $k_0$ = (S) mod N, $k_1$ = (S + 1) mod N, and $k_2$ = (S + 3) mod N;
manner 3: $k_0$ = (S) mod N, $k_1$ = (S + 2) mod N, and $k_2$ = (S + 5) mod N;

manner 4: $k_i = \left(S + \frac{N \times i}{3}\right) \bmod N$; and

manner 5: $k_i = \left(S + \left\lfloor \frac{N \times i}{4} \right\rfloor\right) \bmod N$ , where $\left\lfloor \frac{N \times i}{4} \right\rfloor$ indicates performing flooring on $\frac{N \times i}{4}$ ;

manner 6: $k_i = \left(S + \left\lceil \frac{N \times i}{4} \right\rceil\right) \bmod N$ , where $\left\lceil \frac{N \times i}{4} \right\rceil$ indicates performing ceiling on $\frac{N \times i}{4}$ ;

manner 7: $k_0 = (S) \bmod N$, $k_1 = (S + 3) \bmod N$, and $k_2 = (S + 0) \bmod N$; and

manner 8: $k_0 = (S) \bmod N$, $k_1 = (S + 0) \bmod N$, and $k_2 = (S + 3) \bmod N$.

Herein *mod* indicates a modulo operation, and a value of the S is determined based on network configuration information.

Optionally, in the embodiment of this application, a $k_i$ value determining unit is further included and configured to determine, based on received first indication information, the value of $k_i$ from the any one of manners described above.

For some exemplary descriptions of the foregoing cyclic shift processing process, refer to the foregoing description of step S402. Details are not described herein again.

Optionally, in the embodiment of this application, the first configuration information includes the first indication information.

Optionally, in the embodiment of this application, the first SRS resource may be configured by using RRC.

Optionally, in the embodiment of this application, that the first SRS resource is configured by using RRC includes: Each first SRS resource is corresponding to two or three SRS resources; or each first SRS resource is corresponding to three ports in one 4-port SRS resource.

It should be noted that, each first SRS resource being corresponding to two or three SRS resources is designed based on an existing 1-port SRS resource and an existing 2-port SRS resource, which may reduce workload of whole design and improve processing efficiency. Each first SRS resource being corresponding to three ports in one 4-port SRS resource is designed based on an existing 4-port SRS resource, which may reduce workload of whole design and improve processing efficiency.

In some examples, the first SRS resource is configured by using RRC, and at least one of the following RRC signalling structures may be used:

manner 1: the first SRS resource is configured by using a field (a field may also be referred to as a field) recorded as SRS-Resource in RRC signalling, for example, the first SRS resource is configured by using signalling RRC IE SRS-Resource; and

manner 2: the first SRS resource is configured by using a field (a field may also be referred to as a field) recorded as SRS-ResourceSet in RRC signalling.

Optionally, in the embodiment of this application, in a case that each first SRS resource is corresponding to two SRS resources, each first SRS resource is corresponding to one 1-port SRS resource and one 2-port SRS resource.

Optionally, in the embodiment of this application, the one 1-port SRS resource and the one 2-port SRS resource are located on a same symbol. For example, the one 1-port SRS resource and the one 2-port SRS resource are located on a same OFDM symbol, or the one 1-port SRS resource and the one 2-port SRS resource are located on a same SC-FDMA symbol.

Optionally, in embodiments of this application, orthogonal frequency division multiplexing corresponds to a case in which transform precoding is not enabled in the TS 38.211, and single-carrier frequency division multiplexing corresponds to a case in which transform precoding is enabled in the TS 38.211 (OFDM corresponds to a case in which transform precoding is not enabled in the TS 38.211, and SC-FDMA corresponds to a case in which transform precoding is enabled in the TS 38.211).

Optionally, in the embodiment of this application, in a case that each first SRS resource is corresponding to three SRS resources, each first SRS resource is corresponding to three 1-port SRS resources.

Optionally, in the embodiment of this application, that each first SRS resource is corresponding to three 1-port SRS resources includes: The three 1-port SRS resources are on a same symbol. For example, the three 1-port SRS resources are located on a same OFDM symbol. Alternatively, the three 1-port SRS resources are located on a same SC-FDMA symbol.

Optionally, in the embodiment of this application, in a case that each first SRS resource is corresponding to two or three SRS resources, each first SRS resource is corresponding to one subset of the first SRS resource set, and the subset is corresponding to two or three SRS resources that correspond to each first SRS resource.

Optionally, in the embodiment of this application, a second receiving unit is further included and configured to receive second indication information transmitted by a network device; each first SRS resource is corresponding to the second indication information in the first SRS resource set; and the second indication information is used to indicate that each first SRS resource is corresponding to two or three SRS resources.

Optionally, in the embodiment of this application, in a case that each first SRS resource is corresponding to three ports in one 4-port SRS resource, each first SRS resource is corresponding to an SRS resource of other ports different from a first port in the 4-port SRS resource. In other words, the 4-port SRS resource is transmitted by using other ports except a first port.

Optionally, in the embodiment of this application, a port number of the first port satisfies a sequence with number values sorted in descending order: $j_1$, $j_2$, $j_3$, and $j_4$, for example, $j_1$ is a port with the largest number and $j_4$ is a port with the smallest number, and a port of the first port is determined in the any one of manners as follows:

manner 1: the first port is a port with a port number recorded as $j_4$ in the 4-port SRS resource;
manner 2: the first port is a port with a port number recorded as $j_1$ in the 4-port SRS resource;
manner 3: the first port is a port with a port number recorded as $j_3$ in the 4-port SRS resource; and
manner 4: the first port is a port with a port number recorded as $j_2$ in the 4-port SRS resource.

Optionally, in the embodiment of this application, a port determining unit is further included and configured to receive third indication information transmitted by the network device, and determine, based on the third indication information, a port used by the first port from the any one of manners.

Optionally, in the embodiment of this application, a port determining unit is further included and configured to determine, according to a predefined rule, a port to be used from the any one of manners described above.

Optionally, in the embodiment of this application, a cyclic shift manner corresponding to the 4-port SRS resource is used for a cyclic shift corresponding to the first SRS resource port, that is to say, in a case that the 4-port SRS resource is transmitted based on three ports, the three ports for transmission may use a cyclic shift manner same as that corresponding to existing four ports.

Optionally, in the embodiment of this application, a third receiving unit is further included and configured to receive fourth indication information transmitted by the network device. The 4-port SRS resource is corresponding to the fourth indication information, and the fourth indication information is used to indicate that the 4-port SRS resource is to be transmitted based on three ports.

Optionally, in the embodiment of this application, a fourth receiving unit is further included and configured to receive fifth indication information transmitted by the network device, where the fifth indication information is used to indicate a second SRS resource, and the second SRS resource is one of the one or more first SRS resources. Optionally, the first SRS resource set includes two or more SRS resources.

In some examples, the fourth receiving unit is configured to receive the fifth indication information by using DCI. A format of the DCI format includes a format DCI format 0_1 and/or a format DCI format 0_2.

In some examples, the fourth receiving unit is configured to receive the fifth indication information by using signalling RRC IE rrc-ConfiguredUplinkGrant. The fifth indication information may be included in the signalling RRC IE rrc-ConfiguredUplinkGrant. For example, the fifth indication information is transmitted by using an RRC parameter "srs-ResourceIndicator".

Optionally, in the embodiment of this application, an encoding unit is further included and configured to determine a first precoding or a first TPMI; and the first precoding or the first TPMI is corresponding to a second SRS resource (the second SRS resource may be a first SRS resource in first SRS resources in foregoing embodiments).

Optionally, in the embodiment of this application, a second transmitting unit is included and configured to transmit uplink data (or transmit a PUSCH). An antenna port used in uplink data transmission is the same as a port of the second SRS resource, that is, The UE shall transmit PUSCH using the same antenna port(s) as the SRS port(s) in the SRS resource.

Optionally, in the embodiment of this application, the three ports of the first SRS resource are transmitted on a frequency domain resource group.

Optionally, in the embodiment of this application, the three ports of the first SRS resource are transmitted on the frequency domain resource group in any one of the following manners:

manner 1: a first port and a third port in the first SRS resource are transmitted on a first frequency domain resource group, and a second port is transmitted on a second frequency domain resource group;
manner 2: a first port and a second port are transmitted on a first frequency domain resource group, and a third port is transmitted on a second frequency domain resource group; and
manner 3: a first port is transmitted on a first frequency domain resource group, and a second port and a third port are transmitted on a second frequency domain resource group.

Optionally, in the embodiment of this application, each of the first frequency domain resource group and the second frequency domain resource group is corresponding to one comb.

Optionally, in the embodiment of this application, resources in the first frequency domain resource group are equally spaced in frequency domain, resources in the second frequency domain resource group are equally spaced in frequency domain, and there is no resource intersection between the first frequency domain resource group and the second frequency domain resource group.

Optionally, in the embodiment of this application, a reporting unit is further included and configured to report a first terminal capability, where the first terminal capability supports a first SRS resource for 3-port transmission and/or supports 3-port uplink physical shared channel transmission.

Optionally, in the embodiment of this application, the reporting unit is configured to report the first terminal capability by using RRC signalling or a MAC CE.

Optionally, in the embodiment of this application, the first terminal capability includes any one of the following types:

> type 1: a capability of independently reporting for different frequency bands;
> type 2: the first terminal capability includes a capability of independently reporting for different frequency band combinations;
> type 3: the first terminal capability includes a capability of independently reporting for each frequency band in different frequency band combinations;
> type 4: the first terminal capability includes a capability of independently reporting for each carrier on each frequency band in different frequency band combinations;
> type 5: the first terminal capability includes a capability of independently reporting for a frequency band range; and
> type 6: the first terminal capability includes a capability of reporting for a first terminal and being supporting on each frequency band.

Optionally, in the embodiment of this application, the first configuration information is transmitted in any one of the following manners:

> manner 1: the first configuration information is transmitted by using RRC signalling;
> manner 2: the first configuration information is transmitted by using MAC CE signalling; and
> manner 3: the first configuration information is transmitted by using DCI signalling.

Optionally, in the embodiment of this application, a codebook configuration unit is further included and adapted to configure a field or field in signalling RRC IE corresponding to the first SRS resource set as a codebook, or to set a field (or field) named "usage" in an RRC IE corresponding to the first SRS resource set as a codebook.

Optionally, in the embodiment of this application, an SRS transmission configuration unit is further included and adapted to configure a resource type resourceType in SRS-ResourceSet corresponding to the first SRS resource set as one of aperiodic SRS transmission, semi-persistent SRS transmission, or periodic SRS transmission.

Optionally, in the embodiment of this application, a fourth configuration unit is further included and adapted to configure an SRS resource included in the first SRS resource set, and all SRS resources used for 3-port transmission.

Optionally, in the embodiment of this application, a fifth configuration unit is further included and adapted to configure that ports of other SRS resources without belonging to the first SRS resource and different from all first SRS resources in the first SRS resource set are less than 3.

Optionally, in the embodiment of this application, a fifth receiving unit is further included and configured to receive second configuration information, and the second configuration information is used to indicate that full power transmission is configured for uplink data transmission. For example, a power value is configured as a full power mode 2 (for example, *fullpowerMode2*), that is, a value of an RRC parameter ul-FullPowerTransmission is *"fullpowerMode2"* .

A terminal device in the embodiment of this application includes a reporting unit, configured to perform configuration based on the information configuration method in any one of embodiments of this application, and report a first terminal capability. The first terminal capability supports a first SRS resource for 3-port transmission and/or supports 3-port uplink physical shared channel transmission.

The terminal device 1500 in the embodiment of this application can implement a corresponding function of the terminal device in the foregoing method embodiments. For procedures, functions, implementations, and beneficial effects corresponding to modules (submodules, units, components, or the like) in the terminal device 1500, reference may be made to corresponding descriptions in the foregoing method embodiments. Details are not described herein again. It should be noted that functions of modules (submodules, units, components, or the like) in the terminal device 1500 in the embodiment of this application may be implemented by different modules (submodules, units, components, or the like), or may be implemented by a same module (submodule, unit, component, or the like).

FIG. 16 is a schematic block diagram of a network device 1600 according to an embodiment of this application.

The network device 1600 may include a first transmitting unit 1610, configured to transmit first configuration information to a terminal device. The first configuration information is used to indicate a first SRS resource set, the first SRS resource set includes one or more sounding reference signal resources SRS resources, and the one or more SRS resources include at least one first SRS resource for 3-port transmission.

Optionally, in the embodiment of this application, there is a mapping relationship between three ports of the first SRS resource and cyclic shift values.

In some examples, in a case that the mapping relationship meets $\alpha_i = \frac{2\pi}{N} \times k_i$, the cyclic shift values are determined, where $\alpha_i$ is a cyclic shift value, $N$ is a maximum quantity of cyclic shifts, $k_i$ is a positive integer greater than or equal to 0, and $i$ is corresponding to three ports and $i$ = 0, 1, 2. Optionally, the network device may transmit the mapping relationship by using DCI or MAC CE signalling or RRC signalling, that is, may indicate the cyclic shift value by using DCI or MAC CE signalling or RRC signalling.

Optionally, in the embodiment of this application, a first indication unit is further included and configured to transmit higher layer signalling, and indicate resource configuration of the first SRS resource by using the higher layer signalling. Optionally, the higher layer signalling may be RRC signalling and/or MAC CE signalling.

Optionally, in the embodiment of this application, that the first indication unit is configured to indicate resource configuration of the first SRS resource by using the higher layer signalling includes: indicating that the first SRS resource may be configured by using RRC.

Optionally, in the embodiment of this application, that the first SRS resource is configured by using RRC includes: Each first SRS resource is corresponding to two or three SRS resources; or each first SRS resource is corresponding to three ports in one 4-port SRS resource.

It should be noted that, each first SRS resource being corresponding to two or three SRS resources is designed based on an existing 1-port SRS resource and an existing 2-port SRS resource, which may reduce workload of whole design and improve processing efficiency. Each first SRS resource being corresponding to three ports in one 4-port SRS resource is designed based on an existing 4-port SRS resource, which may reduce workload of whole design and improve processing efficiency.

In some examples, the first SRS resource is configured by using RRC, and at least one of the following RRC signalling structures may be used:

manner 1: the first SRS resource is configured by using a field (a field may also be referred to as a field) recorded as SRS-Resource in RRC signalling, for example, the first SRS resource is configured by using signalling RRC IE SRS-Resource; and

manner 2: the first SRS resource is configured by using a field (a field may also be referred to as a field) recorded as SRS-ResourceSet in RRC signalling.

Optionally, in the embodiment of this application, the first indication unit is configured to: transmit second indication information, and indicate, by using the second indication information, that each first SRS resource is corresponding to two or three SRS resources.

Optionally, in the embodiment of this application, the first indication unit is configured to: in a case that each first SRS resource is corresponding to two SRS resources, indicate that each first SRS resource is corresponding to one 1-port SRS resource and one 2-port SRS resource.

Optionally, in the embodiment of this application, the one 1-port SRS resource and the one 2-port SRS resource are located on a same symbol. For example, the one 1-port SRS resource and the one 2-port SRS resource are located on a same OFDM symbol, or the one 1-port SRS resource and the one 2-port SRS resource are located on a same SC-FDMA symbol.

Optionally, in the embodiment of this application, the first indication unit is configured to: in a case that each first SRS resource is corresponding to three SRS resources, indicate that each first SRS resource is corresponding to three 1-port SRS resources.

Optionally, in the embodiment of this application, the three 1-port SRS resources are on a same symbol. For example, the three 1-port SRS resources are located on a same OFDM symbol. Alternatively, the three 1-port SRS resources are located on a same SC-FDMA symbol.

Optionally, in the embodiment of this application, the first indication unit is configured to: in a case that each first SRS resource corresponds to two or three SRS resource, indicate that each first SRS resource is corresponding to one subset in the first SRS resource set, where the subset is corresponding to two or three SRS resources that correspond to each first SRS resource.

Optionally, in the embodiment of this application, the first indication unit is configured to: in a case that each first SRS resource is corresponding to one 4-port SRS resource, indicate that each first SRS resource is corresponding to three ports in one 4-port SRS resource. Optionally, each first SRS resource is corresponding to an SRS resource of other ports different from a first port in the 4-port SRS resource. In other words, the 4-port SRS resource is transmitted by using other ports except the first port.

Optionally, in the embodiment of this application, a second indication unit is further included and configured to: transmit third indication information, and instruct, by using the third indication information, the terminal device to determine a port used by the first port from any one of manners,

where a port number of the first port satisfies a sequence with number values sorted in descending order: $j_1$, $j_2$, $j_3$, and $j_4$, for example, $j_1$ is a port with the largest number and $j_4$ is a port with the smallest number, and a port of the first port is determined in the any one of manners as follows:

> manner 1: the first port is a port with a port number recorded as $j_4$ in the 4-port SRS resource;
> manner 2: the first port is a port with a port number recorded as $j_1$ in the 4-port SRS resource;
> manner 3: the first port is a port with a port number recorded as $j_3$ in the 4-port SRS resource; and
> manner 4: the first port is a port with a port number recorded as $j_2$ in the 4-port SRS resource.

Optionally, in the embodiment of this application, the second indication unit is further configured to instruct the terminal device to determine, according to a predefined rule, a port used by the first port from the any one of manners described above.

Optionally, in the embodiment of this application, a first cyclic shift processing unit is further included and configured to indicate, by using DCI, that a cyclic shift manner corresponding to the 4-port SRS resource is used for a cyclic shift corresponding to the first SRS resource port, that is to say, in a case that the 4-port SRS resource is transmitted based on three ports, the three ports for transmission may use a cyclic shift manner same as that corresponding to existing four ports.

Optionally, in the embodiment of this application, a third indication unit is further included and configured to: transmit fourth indication information, and indicate, by using the fourth indication information, that the 4-port SRS resource is transmitted based on three ports.

Optionally, in the embodiment of this application, the fourth indication information and the foregoing third indication information may be same information, or may be transmitted by using a same RRC IE.

Optionally, in the embodiment of this application, a fourth indication unit is further included and configured to transmit fifth indication information. The fifth indication information is used to indicate a second SRS resource, and the second SRS resource is one of the one or more first SRS resources.

In some examples, the fourth indication unit is configured to transmit the fifth indication information by using DCI. A format of the DCI format includes a format DCI format 0_1 and/or a format DCI format 0_2.

In some examples, the fourth indication unit is configured to transmit fifth indication information by using signalling RRC IE rrc-ConfiguredUplinkGrant. The fifth indication information may be included in the signalling RRC IE rrc-ConfiguredUplinkGrant. For example, the fifth indication information may be transmitted by using an RRC parameter "srs-ResourceIndicator".

Optionally, in the embodiment of this application, a second cyclic shift processing unit is further included and configured to indicate, by using the DCI, that the three ports of the first SRS resource are transmitted on a frequency domain resource group.

In some examples, the second cyclic shift processing unit is configured to indicate, by using the DCI, that three ports of the first SRS resource are transmitted on the frequency domain resource group in any one of manners as follows:

> manner 1: a first port and a third port in the first SRS resource are transmitted on a first frequency domain resource group, and a second port is transmitted on a second frequency domain resource group;
> manner 2: a first port and a second port are transmitted on a first frequency domain resource group, and a third port is transmitted on a second frequency domain resource group; and
> manner 3: a first port is transmitted on a first frequency domain resource group, and a second port and a third port are transmitted on a second frequency domain resource group.

Optionally, in the embodiment of this application, each of the first frequency domain resource group and the second frequency domain resource group is corresponding to one comb.

Optionally, in the embodiment of this application, it further includes that: resources in the first frequency domain resource group are equally spaced in frequency domain, resources in the second frequency domain resource group are equally spaced in frequency domain, and there is no resource intersection between the first frequency domain resource group and the second frequency domain resource group.

Optionally, in the embodiment of this application, a reporting unit is further included and configured to receive a first terminal capability, where the first terminal capability supports a first SRS resource for 3-port transmission and/or supports 3-port PUSCH transmission.

In some examples, the reporting unit is configured to receive the first terminal capability by using RRC signalling or a MAC CE.

In some examples, the first terminal capability includes any one of the following types:

type 1: a capability of independently reporting for different frequency bands;
type 2: a capability of independently reporting for different frequency band combinations;
type 3: a capability of independently reporting for each frequency band in different frequency band combinations;
type 4: a capability of independently reporting for each carrier on each frequency band in different frequency band combinations;
type 5: a capability of independently reporting for a frequency band range; and
type 6: a capability of reporting for a first terminal and being supporting on each frequency band.

Optionally, in the embodiment of this application, the first configuration information is transmitted in any one of the following manners:

manner 1: the first configuration information is transmitted by using RRC signalling;
manner 2: the first configuration information is transmitted by using MAC CE signalling; and
manner 3: the first configuration information is transmitted by using DCI signalling.

Optionally, in the embodiment of this application, a codebook configuration unit is further included and configured to instruct to configure a field or field in signalling RRC IE corresponding to the first SRS resource set as a codebook, or to set a field (or field) named "usage" in an RRC IE corresponding to the first SRS resource set as a codebook.

Optionally, in the embodiment of this application, an SRS transmission configuration unit is further included and configured to instruct to configure a resource type resource Type in SRS-ResourceSet corresponding to the first SRS resource set as one of aperiodic SRS transmission, semi-persistent SRS transmission, or periodic SRS transmission.

Optionally, in the embodiment of this application, a fifth indication unit is further included and configured to indicate an SRS resource included in the first SRS resource set, and all SRS resources used for 3-port transmission.

Optionally, in the embodiment of this application, a sixth indication unit is further included and configured to indicate that ports of other SRS resources without belonging to the first SRS resource and different from all first SRS resources in the first SRS resource set are less than 3.

Optionally, in the embodiment of this application, a third transmitting unit is further included and configured to transmit second configuration information, and the second configuration information is used to indicate that full power transmission is configured for uplink data transmission. For example, a power value is configured as a full power mode 2 (for example, *fullpowerMode2*), that is, a value of an RRC parameter ul-FullPowerTransmission is *"fullpowerMode2"* .

The network device 1600 in the embodiment of this application can implement corresponding functions of the network device in the foregoing method embodiments. For procedures, functions, implementations, and beneficial effects corresponding to modules (submodules, units, components, or the like) in the network device 1600, reference may be made to corresponding descriptions in the foregoing method embodiments. Details are not described herein again. It should be noted that functions of modules (submodules, units, components, or the like) in the network device 1600 in the embodiment of this application may be implemented by different modules (submodules, units, components, or the like), or may be implemented by a same module (submodule, unit, component, or the like).

FIG. 17 is a schematic structural diagram of a communications device 1700 according to an embodiment of this application. The communications device 1700 includes a processor 1710, and the processor 1710 may invoke a computer program from a memory and run the computer program to cause the communications device 1700 to implement a method in embodiments of this application.

Optionally, the communications device 1700 may further include a memory 1720. The processor 1710 may invoke a computer program from the memory 1720 and run the computer program to cause the communications device 1700 to implement a method in embodiments of this application.

The memory 1720 may be a separate component independent of the processor 1710, or may be integrated into the processor 1710.

Optionally, the communications device 1700 may further include a transceiver 1730. The processor 1710 may control the transceiver 1730 to communicate with another device. Specifically, the processor 1710 may transmit information or data to the another device, or receive information or data transmitted by the another device.

The transceiver 1730 may include a transmitter and a receiver. The transceiver 1730 may further include an antenna, and a quantity of antennas may be one or more.

Optionally, the communications device 1700 may be the network device in embodiments of this application, and the communications device 1700 may implement corresponding processes implemented by the network device in methods in embodiments of this application. For brevity, details are not described herein again.

Optionally, the communications device 1700 may be the terminal device in embodiments of this application, and the communications device 1700 may implement corresponding processes implemented by the terminal device in methods in embodiments of this application. For brevity, details are not described herein again.

FIG. 18 is a schematic structural diagram of a chip 1800 according to an embodiment of this application. The chip 1800 includes a processor 1810, and the processor 1810 may invoke a computer program from a memory and run the computer program to implement a method in embodiments of this application.

Optionally, the chip 1800 may further include a memory 1820. The processor 1810 may invoke a computer program from the memory 1820 and run the computer program, so as to implement a method executed by the terminal device or the network device in embodiments of this application.

The memory 1820 may be a separate component independent of the processor 1810, or may be integrated into the processor 1810.

Optionally, the chip 1800 may further include an input interface 1830. The processor 1810 may control the input interface 1830 to communicate with another device or chip, and specifically, may obtain information or data transmitted by the another device or chip.

Optionally, the chip 1800 may further include an output interface 1840. The processor 1810 may control the output interface 1840 to communicate with another device or chip, and specifically, may output information or data to the another device or chip.

Optionally, the chip may be applied to the network device in embodiments of this application, and the chip may implement corresponding processes implemented by the network device in methods in embodiments of this application. For brevity, details are not described herein again.

Optionally, the chip may be applied to the terminal device in embodiments of this application, and the chip may implement corresponding processes implemented by the terminal device in methods in embodiments of this application. For brevity, details are not described herein again.

Chips applied to the network device and the terminal device may be a same chip or different chips.

It should be understood that the chip mentioned in the embodiment of this application may also be referred to as a system-level chip, a system chip, a chip system, or a system-on-chip, or the like.

The foregoing mentioned processor may be a general-purpose processor, a digital signal processor (digital signal processor, DSP), a field programmable gate array (field programmable gate array, FPGA), an application-specific integrated circuit (application specific integrated circuit, ASIC) or another programmable logic device, a transistor logic device, a discrete hardware component, or the like. The general-purpose processor may be a microprocessor, or may be any conventional processor or the like.

The foregoing mentioned memory may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM).

It should be understood that, by way of example but not limitative description, for example, the memory in the embodiment of this application may alternatively be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synch link DRAM, SLDRAM), a direct rambus random access memory (Direct Rambus RAM, DR RAM), or the like. In other words, the memory in the embodiment of this application includes but is not limited to these memories and any other proper types of memories.

FIG. 19 is a schematic block diagram of a communications system 1900 according to an embodiment of this application. The communications system 1900 includes a terminal device 1910 and a network device 1920. The terminal device 1910 may include a first receiving unit, configured to receive first configuration information. The first configuration information is used to indicate a first sounding reference signal resource set SRS resource set, the first SRS resource set includes one or more sounding reference signal resources SRS resources, and the one or more SRS resources include at least one first SRS resource for 3-port transmission. The network device 1920 may include a first determining unit, configured to determine DCI according to an SRS, and indicate first configuration information by using the DCI. The first configuration information is used to indicate a first SRS resource set, the first SRS resource set includes one or more sounding reference signal resources SRS resources, and the one or more SRS resources include at least one first SRS resource for 3-port transmission.

The terminal device 1910 may be configured to implement corresponding functions implemented by the terminal device in the foregoing method, and the network device 1920 may be configured to implement corresponding functions implemented by the network device in the foregoing methods. For brevity, details are not described herein again.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (such as a coaxial cable, an optical fiber, and a digital subscriber line (digital subscriber line, DSL)) manner or a wireless (such as infrared, wireless, and microwave) manner. The computer-readable storage medium may be any available medium accessible by a computer or a data storage device such as a server or a data center that integrates one or more available media. The available medium may be a magnetic medium (for example, a floppy disk, a hard disk, or a magnetic tape), an optical medium (for example, a DVD), a semiconductor medium (for example, a solid state disk (Solid State Disk, SSD)), or the like.

It should be understood that, in the embodiments of this application, sequence numbers of the foregoing processes do not mean execution sequences. The execution sequences of the processes should be determined according to functions and internal logic of the processes, and should not be construed as any limitation on the implementation processes of the embodiments of this application.

It may be clearly understood by a person skilled in the art that, for the purpose of convenient and brief description, for a detailed working process of the foregoing system, apparatus, and unit, reference may be made to corresponding processes in the foregoing method embodiments, and details are not described herein again.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of and the claims.

**Claims**

1. An information configuration method, applied to a terminal device, wherein the method comprises:

    receiving, by the terminal device, first configuration information transmitted by a network device, wherein the first configuration information is used to indicate a first sounding reference signal resource set SRS resource set, the first SRS resource set comprises one or more sounding reference signal resources SRS resources, and the one or more SRS resources comprise at least one first SRS resource for 3-port transmission.

2. The method according to claim 1, wherein a mapping relationship exists between three ports of the first SRS resource and cyclic shift values.

3. The method according to claim 2, wherein in a case that the mapping relationship meets $\alpha_i = \frac{2\pi}{N} \times k_i$, the cyclic shift values are determined, wherein $\alpha_i$ is a cyclic shift value, $N$ is a maximum quantity of cyclic shifts, $k_i$ is a positive integer greater than or equal to 0, and $i$ is corresponding to three ports and $i = 0, 1, 2$.

4. The method according to claim 3, wherein in a case that $N = 8$, a value of $k_i$ comprises any one of following manners:

    manner 1: $k_0 = (S)\ mod\ N$, $k_1 = (S + 2)\ mod\ N$, and $k_2 = (S + 5)\ mod\ N$;
    manner 2: $k_0 = (S)\ mod\ N$, $k_1 = (S + 2)\ mod\ N$, and $k_2 = (S + 4)\ mod\ N$;
    manner 3: $k_0 = (S)\ mod\ N$, $k_1 = (S + 3)\ mod\ N$, and $k_2 = (S + 6)\ mod\ N$;
    manner 4: $k_i = \left(S + \left\lfloor \frac{N \times i}{3} \right\rfloor\right)\ mod\ N$, wherein $\left\lfloor \frac{N \times i}{3} \right\rfloor$ indicates performing flooring on $\frac{N \times i}{3}$;
    manner 5: $k_i = \left(S + \left\lceil \frac{N \times i}{3} \right\rceil\right)\ mod\ N$, wherein $\left\lceil \frac{N \times i}{3} \right\rceil$ indicates performing ceiling on $\frac{N \times i}{3}$; and
    manner 6: $k_i = \left(S + \frac{N \times i}{4}\right)\ mod\ N$,
    wherein *mod* indicates a modulo operation, and a value of the $S$ is determined based on network configuration information.

5. The method according to claim 3, wherein in a case that $N = 12$, a value of $k_i$ comprises any one of following manners:

manner 1: $k_0 = (S)\ mod\ N$, $k_1 = (S + 4)\ mod\ N$, and $k_2 = (S + 8)\ mod\ N$;
manner 2: $k_0 = (S)\ mod\ N$, $k_1 = (S + 2)\ mod\ N$, and $k_2 = (S + 4)\ mod\ N$;
manner 3: $k_0 = (S)\ mod\ N$, $k_1 = (S + 3)\ mod\ N$, and $k_2 = (S + 6)\ mod\ N$;

manner 4: $k_i = \left(S + \frac{N \times i}{3}\right) mod\ N$ ; and

manner 5: $k_i = \left(S + \frac{N \times i}{4}\right) mod\ N$ ,

wherein *mod* indicates a modulo operation, and a value of the $S$ is determined based on network configuration information.

6. The method according to claim 3, wherein in a case that $N = 6$, a value of $k_i$ comprises any one of following manners:

manner 1: $k_0 = (S)\ mod\ N$, $k_1 = (S + 2)\ mod\ N$, and $k_2 = (S + 4)\ mod\ N$;
manner 2: $k_0 = (S)\ mod\ N$, $k_1 = (S + 1)\ mod\ N$, and $k_2 = (S + 3)\ mod\ N$;
manner 3: $k_0 = (S)\ mod\ N$, $k_1 = (S + 2)\ mod\ N$, and $k_2 = (S + 5)\ mod\ N$;

manner 4: $k_i = \left(S + \frac{N \times i}{3}\right) mod\ N$ ;

manner 5: $k_i = \left(S + \left\lfloor \frac{N \times i}{4} \right\rfloor\right) mod\ N$ , wherein $\left\lfloor \frac{N \times i}{4} \right\rfloor$ indicates performing flooring on $\frac{N \times i}{4}$ ;

manner 6: $k_i = \left(S + \left\lceil \frac{N \times i}{4} \right\rceil\right) mod\ N$ , wherein $\left\lceil \frac{N \times i}{4} \right\rceil$ indicates performing ceiling on $\frac{N \times i}{4}$ ;
manner 7: $k_0 = (S)\ mod\ N$, $k_1 = (S + 3)\ mod\ N$, and $k_2 = (S + 0)\ mod\ N$; and
manner 8: $k_0 = (S)\ mod\ N$, $k_1 = (S + 0)\ mod\ N$, and $k_2 = (S + 3)\ mod\ N$,
wherein *mod* indicates a modulo operation, and a value of the S is determined based on network configuration information.

7. The method according to any one of claims 3 to 6, further comprising:

receiving, by the terminal device, first indication information transmitted by the network device, wherein the first indication information is used to determine a value of $k_i$ in $\alpha_i = \frac{2\pi}{N} \times k_i$ .

8. The method according to claim 7, wherein the first configuration information further comprises the first indication information.

9. The method according to any one of claims 1 to 8, wherein the first SRS resource is configured by using RRC.

10. The method according to claim 9, wherein that the first SRS resource is configured by using RRC comprises:

each first SRS resource is corresponding to two or three SRS resources; or
each first SRS resource is corresponding to three ports in one 4-port SRS resource.

11. The method according to claim 10, wherein that each first SRS resource is corresponding to two SRS resources comprises:

each first SRS resource is corresponding to one 1-port SRS resource and one 2-port SRS resource.

12. The method according to claim 11, wherein the one 1-port SRS resource and the one 2-port SRS resource are located on a same symbol.

**13.** The method according to claim 12, wherein that the one 1-port SRS resource and the one 2-port SRS resource are located on a same symbol comprises:

the one 1-port SRS resource and the one 2-port SRS resource are located on a same OFDM symbol; or
the one 1-port SRS resource and the one 2-port SRS resource are located on a same SC-FDMA symbol.

**14.** The method according to claim 10, wherein that each first SRS resource is corresponding to three SRS resources comprises:

each first SRS resource is corresponding to three 1-port SRS resources.

**15.** The method according to claim 14, wherein the three 1-port SRS resources are located on a same symbol.

**16.** The method according to claim 15, wherein that the three 1-port SRS resources are located on a same symbol comprises:

the three 1-port SRS resources are located on a same OFDM symbol; or
the three 1-port SRS resources are located on a same SC-FDMA symbol.

**17.** The method according to any one of claims 10 to 16, wherein that each first SRS resource is corresponding to two or three SRS resources comprises:
each first SRS resource is corresponding to one subset in the first SRS resource set, and the subset is corresponding to two or three SRS resources corresponding to each first SRS resource.

**18.** The method according to claim 17, further comprising:

receiving, by the terminal device, second indication information transmitted by the network device,
wherein each first SRS resource is corresponding to the second indication information in the first SRS resource set; and
the second indication information is used to indicate two or three SRS resources corresponding to each first SRS resource.

**19.** The method according to claim 10, wherein that each first SRS resource is corresponding to three ports in one 4-port SRS resource comprises:
each first SRS resource is corresponding to an SRS resource of other ports different from a first port in the 4-port SRS resource.

**20.** The method according to claim 19, wherein a port number of the first port satisfies a sequence with number values sorted in descending order: $j_1$, $j_2$, $j_3$, and $j_4$, and the first port is determined in any one of manners as follows:

manner 1: the first port is a port with a port number recorded as $j_4$ in the 4-port SRS resource;
manner 2: the first port is a port with a port number recorded as $j_1$ in the 4-port SRS resource;
manner 3: the first port is a port with a port number recorded as $j_3$ in the 4-port SRS resource; and
manner 4: the first port is a port with a port number recorded as $j_2$ in the 4-port SRS resource.

**21.** The method according to claim 20, further comprising:

receiving, by the terminal device, third indication information transmitted by the network device, and determining, based on the third indication information, a port to be used by the first port from the any one of manners; or
determining, according to a predefined rule, a port used by the first port from the any one of manners.

**22.** The method according to claim 19, further comprising:
for a cyclic shift corresponding to the first SRS resource port, using a cyclic shift manner corresponding to the 4-port SRS resource.

**23.** The method according to claim 19, further comprising:

receiving, by the terminal device, fourth indication information transmitted by the network device,

wherein the 4-port SRS resource is corresponding to the fourth indication information, and the fourth indication information is used to indicate that the 4-port SRS resource is to be transmitted based on three ports.

24. The method according to any one of claims 1 to 23, further comprising:

    receiving, by the terminal device, fifth indication information transmitted by the network device,
    wherein the fifth indication information is used to indicate a second SRS resource, and the second SRS resource is one of the one or more first SRS resources.

25. The method according to claim 24, wherein the receiving, by the terminal device, fifth indication information transmitted by the network device comprises: receiving, by the terminal device, the fifth indication information by using downlink control information DCI, wherein a format of the DCI comprises a format DCI format 0_1 and/or a format DCI format 0_2.

26. The method according to claim 24, wherein the first SRS resource set comprises two or more SRS resources.

27. The method according to claim 24, wherein the receiving, by the terminal device, fifth indication information transmitted by the network device comprises:
    receiving, by the terminal device, the fifth indication information by using signalling RRC IE rrc-ConfiguredUplinkGrant, wherein the fifth indication information is comprised in the signalling RRC IE rrc-ConfiguredUplinkGrant and transmitted by using an RRC parameter srs-ResourceIndicator.

28. The method according to claim 24, further comprising:
    transmitting, by terminal device, uplink data, wherein an antenna port used in uplink data transmission is the same as a port of the second SRS resource.

29. The method according to any one of claims 1 to 28, further comprising:
    transmitting the three ports of the first SRS resource on a frequency domain resource group.

30. The method according to claim 29, wherein the transmitting the three ports of the first SRS resource on a frequency domain resource group is performed in any one of following manners:

    manner 1: a first port and a third port in the first SRS resource are transmitted on a first frequency domain resource group, and a second port is transmitted on a second frequency domain resource group;
    manner 2: a first port and a second port are transmitted on a first frequency domain resource group, and a third port is transmitted on a second frequency domain resource group; and
    manner 3: a first port is transmitted on a first frequency domain resource group, and a second port and a third port are transmitted on a second frequency domain resource group.

31. The method according to claim 30, further comprising that:
    each of the first frequency domain resource group and the second frequency domain resource group is corresponding to one comb.

32. The method according to claim 30, further comprising that:
    resources in the first frequency domain resource group are equally spaced in frequency domain, resources in the second frequency domain resource group are equally spaced in frequency domain, and there is no resource intersection between the first frequency domain resource group and the second frequency domain resource group.

33. The method according to claim 1, further comprising:
    reporting, by the terminal device, a first terminal capability, wherein the first terminal capability supports a first SRS resource for 3-port transmission and/or supports 3-port uplink physical shared channel transmission.

34. The method according to claim 33, wherein the reporting, by the terminal device, a first terminal capability comprises:
    reporting, by the terminal device, the first terminal capability by using RRC signalling or a medium access layer control element MAC CE.

35. The method according to claim 33, wherein the first terminal capability comprises any one of following types:

type 1: a capability of independently reporting for different frequency bands;
type 2: a capability of independently reporting for different frequency band combinations;
type 3: a capability of independently reporting for each frequency band in different frequency band combinations;
type 4: a capability of independently reporting for each carrier on each frequency band in different frequency band combinations;
type 5: a capability of independently reporting for a frequency band range; and
type 6: a capability of reporting for a first terminal and being supporting on each frequency band.

36. A terminal reporting method, applied to a terminal device, wherein the method comprises:
performing, by the terminal device, configuration based on the information configuration method according to any one of claims 1 to 35, and reporting a first terminal capability, wherein the first terminal capability supports a first SRS resource for 3-port transmission and/or supports 3-port uplink physical shared channel transmission.

37. An information configuration method, applied to a network device, wherein the method comprises:

transmitting, by a network device, first configuration information,
wherein the first configuration information is used to indicate a first sounding reference signal resource set SRS resource set, the first SRS resource set comprises one or more sounding reference signal resources SRS resources, and the one or more SRS resources comprise at least one first SRS resource for 3-port transmission.

38. The method according to claim 37, wherein a mapping relationship exists between three ports of the first SRS resource and cyclic shift values.

39. The method according to claim 38, wherein in a case that the mapping relationship meets $\alpha_i = \frac{2\pi}{N} \times k_i$, the cyclic shift values are determined, wherein $\alpha_i$ is a cyclic shift value, $N$ is a maximum quantity of cyclic shifts, $k_i$ is a positive integer greater than or equal to 0, and $i$ is corresponding to three ports and $i = 0, 1, 2$.

40. The method according to claim 38, wherein transmitting, by the network device, the mapping relationship comprises:
transmitting, by the network device, the mapping relationship by using downlink control information DCI, medium access layer control element MAC CE signalling, or RRC signalling.

41. The method according to claim 39, further comprising:

transmitting, by the network device, first indication information, wherein

the first indication information is used to instruct a terminal device to determine a value of $k_i$ in $\alpha_i = \frac{2\pi}{N} \times k_i$; and
in a case that $N = 8$, a value of $k_i$ comprises any one of following manners:

manner 1: $k_0 = (S) \bmod N$, $k_1 = (S + 2) \bmod N$, and $k_2 = (S + 5) \bmod N$;
manner 2: $k_0 = (S) \bmod N$, $k_1 = (S + 2) \bmod N$, and $k_2 = (S + 4) \bmod N$;
manner 3: $k_0 = (S) \bmod N$, $k_1 = (S + 3) \bmod N$, and $k_2 = (S + 6) \bmod N$;

manner 4: $k_i = \left(S + \left\lfloor \frac{N \times i}{3} \right\rfloor\right) \bmod N$; wherein $\left\lfloor \frac{N \times i}{3} \right\rfloor$ indicates performing flooring on $\frac{N \times i}{3}$;

manner 5: $k_i = \left(S + \left\lceil \frac{N \times i}{3} \right\rceil\right) \bmod N$, wherein $\left\lceil \frac{N \times i}{3} \right\rceil$ indicates performing ceiling on $\frac{N \times i}{3}$; and

manner 6: $k_i = \left(S + \frac{N \times i}{4}\right) \bmod N$,
wherein $mod$ indicates a modulo operation, and a value of the $S$ is determined based on network configuration information transmitted by the network device.

42. The method according to claim 39, further comprising:

transmitting, by the network device, first indication information,
wherein the first indication information is used to instruct a terminal device to determine a value of $k_i$ in

$$\alpha_i = \frac{2\pi}{N} \times k_i$$
; and

in a case that $N$ = 12, a value of $k_i$ comprises any one of following manners:

    manner 1: $k_0$ = $(S)$ *mod N*, $k_1$ = $(S + 4)$ *mod N*, and $k_2$ = $(S + 8)$ *mod N*;
    manner 2: $k_0$ = $(S)$ *mod N*, $k_1$ = $(S + 2)$ *mod N*, and $k_2$ = $(S + 4)$ *mod N*;
    manner 3: $k_0$ = $(S)$ *mod N*, $k_1$ = $(S + 3)$ *mod N*, and $k_2$ = $(S + 6)$ *mod N*;

    manner 4: $k_i = \left(S + \frac{N \times i}{3}\right) \bmod N$ ; and

    manner 5: $k_i = \left(S + \frac{N \times i}{4}\right) \bmod N$ ,

    wherein *mod* indicates a modulo operation, and a value of the $S$ is determined based on network configuration information transmitted by the network device.

**43.** The method according to claim 39, further comprising:

    transmitting, by the network device, first indication information,
    wherein the first indication information is used to instruct a terminal device to determine a value of $k_i$ in

$$\alpha_i = \frac{2\pi}{N} \times k_i$$
; and

in a case that $N$ = 6, a value of $k_i$ comprises any one of following manners:

    manner 1: $k_0$ = $(S)$ *mod N*, $k_1$ = $(S + 2)$ *mod N*, and $k_2$ = $(S + 4)$ *mod N*;
    manner 2: $k_0$ = $(S)$ *mod N*, $k_1$ = $(S + 1)$ *mod N*, and $k_2$ = $(S + 3)$ *mod N*;
    manner 3: $k_0$ = $(S)$ *mod N*, $k_1$ = $(S + 2)$ *mod N*, and $k_2$ = $(S + 5)$ *mod N*;

    manner 4: $k_i = \left(S + \frac{N \times i}{3}\right) \bmod N$ ;

    manner 5: $k_i = \left(S + \left\lfloor \frac{N \times i}{4} \right\rfloor\right) \bmod N$ , wherein $\left\lfloor \frac{N \times i}{4} \right\rfloor$ indicates performing flooring on $\frac{N \times i}{4}$ ;

    manner 6: $k_i = \left(S + \left\lceil \frac{N \times i}{4} \right\rceil\right) \bmod N$ , wherein $\left\lceil \frac{N \times i}{4} \right\rceil$ indicates performing ceiling on $\frac{N \times i}{4}$ ; and
    manner 7: $k_0$ = $(S)$ *mod N*, $k_1$ = $(S + 3)$ *mod N*, and $k_2$ = $(S + 0)$ *mod N*; and
    manner 8: $k_0$ = $(S)$ *mod N*, $k_1$ = $(S + 0)$ *mod N*, and $k_2$ = $(S + 3)$ *mod N*,
    wherein *mod* indicates a modulo operation, and a value of the $S$ is determined based on network configuration information transmitted by the network device.

**44.** The method according to any one of claims 41 to 43, wherein the first configuration information further comprises the first indication information.

**45.** The method according to any one of claims 37 to 44, further comprising:
transmitting, by the network device, higher layer signalling, and indicating resource configuration of the first SRS resource by using the higher layer signalling.

**46.** The method according to claim 45, wherein the transmitting, by the network device, higher layer signalling, and indicating resource configuration of the first SRS resource by using the higher layer signalling comprises:
indicating that the first SRS resource is to be configured by using RRC.

**47.** The method according to claim 46, wherein the indicating that the first SRS resource is to be configured by using RRC comprises:
transmitting, by the network device, second indication information, and indicating, by using the second indication information, that each first SRS resource is corresponding to two or three SRS resources.

**48.** The method according to claim 47, wherein the transmitting, by the network device, second indication information, and indicating, by using the second indication information, that each first SRS resource is corresponding to two SRS resources comprises:
indicating that each first SRS resource is corresponding to one 1-port SRS resource and one 2-port SRS resource.

49. The method according to claim 47, wherein the one 1-port SRS resource and the one 2-port SRS resource are located on a same symbol.

50. The method according to claim 49, wherein that the one 1-port SRS resource and the one 2-port SRS resource are located on a same symbol comprises:

the one 1-port SRS resource and the one 2-port SRS resource are located on a same OFDM symbol; or
the one 1-port SRS resource and the one 2-port SRS resource are located on a same SC-FDMA symbol.

51. The method according to claim 47, wherein the transmitting, by the network device, second indication information, and indicating, by using the second indication information, that each first SRS resource is corresponding to three SRS resources comprises:
indicating that each first SRS resource is corresponding to three 1-port SRS resources.

52. The method according to claim 51, wherein the three 1-port SRS resources are located on a same symbol.

53. The method according to claim 52, wherein that the three 1-port SRS resources are located on a same symbol comprises:

the three 1-port SRS resources are located on a same OFDM symbol; or
the three 1-port SRS resources are located on a same SC-FDMA symbol.

54. The method according to any one of claims 47 to 53, wherein the transmitting, by the network device, second indication information, and indicating, by using the second indication information, that each first SRS resource is corresponding to two or three SRS resources comprises:
indicating that each first SRS resource is corresponding to one subset in the first SRS resource set, wherein the subset is corresponding to two or three SRS resources corresponding to each first SRS resource.

55. The method according to claim 46, wherein the indicating that the first SRS resource is to be configured by using RRC comprises:
indicating, by the network device, that each first SRS resource is corresponding to three ports in one 4-port SRS resource.

56. The method according to claim 55, wherein the indicating, by the network device, that each first SRS resource is corresponding to three ports in one 4-port SRS resource comprises:
indicating, by the network device, that each first SRS resource is corresponding to an SRS resource of other ports different from a first port in the 4-port SRS resource.

57. The method according to claim 56, further comprising:

transmitting, by the network device, third indication information, and instructing, by using the third indication information, the terminal device to determine a port used by the first port from any one of manners; or
instructing the terminal device to determine, according to a predefined rule, a port used by the first port from any one of manners,
wherein a port number of the first port satisfies a sequence with number values sorted in descending order: $j_1$, $j_2$, $j_3$, and $j_4$, and the port of the first port is determined in the any one of manners as follows:

manner 1: the first port is a port with a port number recorded as $j_4$ in the 4-port SRS resource;
manner 2: the first port is a port with a port number recorded as $j_1$ in the 4-port SRS resource;
manner 3: the first port is a port with a port number recorded as $j_3$ in the 4-port SRS resource; and
manner 4: the first port is a port with a port number recorded as $j_2$ in the 4-port SRS resource.

58. The method according to claim 56, further comprising: instructing, by the network device by using DCI, the terminal device to use a cyclic shift manner corresponding to the 4-port SRS resource for a cyclic shift corresponding to the first SRS resource port.

**59.** The method according to claim 56, further comprising: transmitting, by the network device, fourth indication information, wherein the fourth indication information indicates that the 4-port SRS resource is transmitted based on three ports.

**60.** The method according to any one of claims 37 to 59, further comprising:
transmitting, by the network device, fifth indication information, wherein the fifth indication information is used to indicate a second SRS resource, and the second SRS resource is one of the one or more first SRS resources.

**61.** The method according to claim 60, wherein the transmitting, by the network device, fifth indication information comprises:
transmitting, by the network device, the fifth indication information by using DCI, wherein a format of the DCI comprises a format DCI format 0_1 and/or a format DCI format 0_2.

**62.** The method according to claim 60, wherein the transmitting, by the network device, fifth indication information comprises:

transmitting, by the network device, the fifth indication information by using signalling RRC IE rrc-ConfiguredUplinkGrant,
wherein the fifth indication information is comprised in the signalling RRC IE rrc-ConfiguredUplinkGrant and transmitted by using an RRC parameter srs-ResourceIndicator.

**63.** The method according to any one of claims 37 to 62, further comprising:
indicating, by the network device by using DCI, that the three ports of the first SRS resource are transmitted on a frequency domain resource group.

**64.** The method according to claim 63, wherein the indicating, by the network device by using the DCI, that the three ports of the first SRS resource are transmitted on a frequency domain resource group comprises any one of following manners:

manner 1: the network device indicates that a first port and a third port in the first SRS resource are transmitted on a first frequency domain resource group, and a second port is transmitted on a second frequency domain resource group;
manner 2: the network device indicates that a first port and a second port are transmitted on a first frequency domain resource group, and a third port is transmitted on a second frequency domain resource group; and
manner 3: the network device indicates that a first port is transmitted on a first frequency domain resource group, and a second port and a third port are transmitted on a second frequency domain resource group.

**65.** The method according to claim 64, further comprising that:
each of the first frequency domain resource group and the second frequency domain resource group is corresponding to one comb.

**66.** The method according to claim 64, further comprising that:
resources in the first frequency domain resource group are equally spaced in frequency domain, resources in the second frequency domain resource group are equally spaced in frequency domain, and there is no resource intersection between the first frequency domain resource group and the second frequency domain resource group.

**67.** The method according to claim 37, further comprising: receiving, by the network device, a first terminal capability, wherein the first terminal capability supports a first SRS resource for 3-port transmission and/or supports 3-port uplink physical shared channel transmission.

**68.** The method according to claim 67, wherein the receiving, by the network device, a first terminal capability comprises:
receiving, by the network device, the first terminal capability by using RRC signalling or a medium access layer control element MAC CE.

**69.** The method according to claim 68, wherein the first terminal capability comprises any one of following types:

type 1: a capability of independently reporting for different frequency bands;
type 2: a capability of independently reporting for different frequency band combinations;

type 3: a capability of independently reporting for each frequency band in different frequency band combinations;

type 4: a capability of independently reporting for each carrier on each frequency band in different frequency band combinations;

type 5: a capability of independently reporting for a frequency band range; and

type 6: a capability of reporting for a first terminal and being supporting on each frequency band.

70. A terminal device, comprising:

a first receiving unit, configured to receive first configuration information,

wherein the first configuration information is used to indicate a first sounding reference signal resource set SRS resource set, the first SRS resource set comprises one or more sounding reference signal resources SRS resources, and the one or more SRS resources comprise at least one first SRS resource for 3-port transmission.

71. A terminal device, comprising:

a reporting unit, configured to perform configuration based on the information configuration method according to any one of the foregoing claims 1 to 35, and report a first terminal capability,

wherein the first terminal capability supports a first SRS resource for 3-port transmission and/or supports 3-port uplink physical shared channel transmission.

72. A network device, comprising:

a first transmitting unit, configured to transmit first configuration information,

wherein the first configuration information is used to indicate a first sounding reference signal resource set SRS resource set, the first SRS resource set comprises one or more sounding reference signal resources SRS resources, and the one or more SRS resources comprise at least one first SRS resource for 3-port transmission.

73. A terminal device, comprising a processor and a memory, wherein the memory is configured to store a computer program, and the processor is configured to invoke and run the computer program stored in the memory to cause the terminal device to execute the method according to any one of claims 1 to 36.

74. A network device, comprising a processor and a memory, wherein the memory is configured to store a computer program, and the processor is configured to invoke and run the computer program stored in the memory, to cause the network device to execute the method according to any one of claims 37 to 69.

75. A chip, comprising a processor, configured to invoke a computer program from a memory and run the computer program, to cause a device installed with the chip to execute the method according to any one of claims 1 to 36.

76. A chip, comprising a processor, configured to invoke a computer program from a memory and run the computer program, to cause a device installed with the chip to execute the method according to any one of claims 37 to 69.

77. A computer-readable storage medium, configured to store a computer program, wherein when the computer program is run by a device, the device executes the method according to any one of claims 1 to 36.

78. A computer-readable storage medium, configured to store a computer program, wherein when the computer program is run by a device, the device executes the method according to any one of claims 37 to 69.

79. A computer program product, comprising computer program instructions, wherein the computer program instructions cause a computer to execute the method according to any one of claims 1 to 36.

80. A computer program product, comprising computer program instructions, wherein the computer program instructions cause a computer to execute the method according to any one of claims 37 to 69.

81. A computer program, wherein the computer program causes a computer to execute the method according to any one of claims 1 to 36.

82. A computer program, wherein the computer program causes a computer to execute the method according to any one of claims 37 to 69.

83. A communications system, comprising:

a terminal device, configured to execute the method according to any one of claims 1 to 36; and
a network device, configured to execute the method according to any one of claims 37 to 69.

**100**

FIG. 1

**200**

S210. Transmit configuration information related to an SRS signal, which supports at least 3-port PUSCH transmission

S220. Transmit the SRS signal

S230. Transmit indication information, where the indication information is used to schedule PUSCH transmission

S240. Transmit PUSCH

FIG. 2

**300**

A terminal device receives first configuration information transmitted by a network device; and the first configuration information is used to indicate a first SRS resource set, the first SRS resource set includes one or more SRS resources, and the one or more SRS resources include at least one first SRS resource for 3-port transmission

S310

FIG. 3

**400**

A terminal device receives first configuration information transmitted by a network device; the first configuration information is used to indicate a first SRS resource set, the first SRS resource set includes one or more SRS resources, and the one or more SRS resources include at least one first SRS resource for 3-port transmission

S410

There is a mapping relationship between three ports of the first SRS resource and cyclic shift values

S420

FIG. 4

500

| A terminal device receives first configuration information transmitted by a network device; the first configuration information is used to indicate a first SRS resource set, the first SRS resource set includes one or more SRS resources, and the one or more SRS resources include at least one first SRS resource for 3-port transmission | S510 |

| The first SRS resource may be configured by using RRC | S520 |

FIG. 5

600

Frequency domain

One 1-port SRS resource

One 2-port SRS resource

602

601

Time domain

FIG. 6

700

Frequency domain

Three 1-port SRS resource

702

701

Time domain

FIG. 7

One sub-set, where the sub-set is corresponding to two or three SRS resources corresponding to each first SRS resource

**800**

Frequency domain

802

801

Time domain

## FIG. 8

Second indication information in a first SRS resource set, where the second indication information is used to indicate two or three SRS resources corresponding to each first SRS resource

**900**

Frequency domain

902

901

Time domain

## FIG. 9

**1000**

A terminal device receives first configuration information transmitted by a network device; and the first configuration information is used to indicate a first SRS resource set, the first SRS resource set includes one or more SRS resources, and the one or more SRS resources include at least one first SRS resource for 3-port transmission — S1010

There is a mapping relationship between three ports of the first SRS resource and cyclic shift values — S1030

The three ports of the first SRS resource are transmitted on a frequency domain resource group — S1020

## FIG. 10

1100

| A terminal device reports a first terminal capability | S1110 |

A terminal device receives first configuration information transmitted by a network device; and the first configuration information is used to indicate a first SRS resource set, the first SRS resource set includes one or more SRS resources, and the one or more SRS resources include at least one first SRS resource for 3-port transmission — S1120

FIG. 11

1200

A terminal device performs configuration based on the information configuration method in any one of foregoing embodiments and reports a first terminal capability, and the first terminal capability supports a first SRS resource for 3-port transmission and/or supports 3-port PUSCH transmission — S1210

FIG. 12

1300

A network device transmits first configuration information to a terminal device, where the first configuration information is used to indicate a first SRS resource set, the first SRS resource set includes one or more SRS resources, and the one or more SRS resources include at least one first SRS resource for 3-port transmission — S1310

FIG. 13

1400

Network device | Terminal device

S1410. A network device transmits first configuration information to a terminal device, the first configuration information is used to indicate a first SRS resource set, the first SRS resource set includes one or more SRS resources, and the one or more SRS resources include at least one first SRS resource for 3-port transmission

S1420. An SRS signal is transmitted to the network device based on the first configuration information

FIG. 14

Terminal device 1500
1510 — First receiving unit

FIG. 15

Network device 1600
1610 — First transmitting unit

FIG. 16

Communications device 1700
Memory 1720 | Processor 1710
Transceiver 1730

FIG. 17

Chip 1800
Input interface 1830 | Processor 1810 | Output interface 1840
Memory 1820

FIG. 18

Communications system 1900
1910 | 1920
Terminal device | Network device

FIG. 19

## INTERNATIONAL SEARCH REPORT

| International application No. |
| --- |
| **PCT/CN2021/135190** |

### A. CLASSIFICATION OF SUBJECT MATTER

H04W 72/12(2009.01)i

According to International Patent Classification (IPC) or to both national classification and IPC

### B. FIELDS SEARCHED

Minimum documentation searched (classification system followed by classification symbols)

H04W; H04L; H04B

Documentation searched other than minimum documentation to the extent that such documents are included in the fields searched

Electronic data base consulted during the international search (name of data base and, where practicable, search terms used)

CNTXT, CJFD, VEN, ENTXT, 3GPP: 3, 三, 端口, SRS, 探测参考信号, 上行共享信道, three, ports, sounding reference signal, PUSCH

### C. DOCUMENTS CONSIDERED TO BE RELEVANT

| Category* | Citation of document, with indication, where appropriate, of the relevant passages | Relevant to claim No. |
| --- | --- | --- |
| X | CN 113557675 A (SAMSUNG ELECTRONICS CO., LTD.) 26 October 2021 (2021-10-26) description, paragraphs [0014] and [0211]-[0495] | 1-83 |
| X | US 2021314037 A1 (SAMSUNG ELECTRONICS CO., LTD.) 07 October 2021 (2021-10-07) description, paragraphs [0010] and [0105]-[0373] | 1-83 |
| A | WO 2020248821 A1 (QUALCOMM INC. et al.) 17 December 2020 (2020-12-17) entire document | 1-83 |
| A | US 2020099488 A1 (LG ELECTRONICS INC.) 26 March 2020 (2020-03-26) entire document | 1-83 |

☐ Further documents are listed in the continuation of Box C.   ☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **29 August 2022** | **02 September 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/135190**

| Patent document cited in search report | | | Publication date (day/month/year) | Patent family member(s) | | | Publication date (day/month/year) |
|---|---|---|---|---|---|---|---|
| CN | 113557675 | A | 26 October 2021 | US | 2022039031 | A1 | 03 February 2022 |
| | | | | KR | 20210100201 | A | 13 August 2021 |
| | | | | EP | 3891904 | A1 | 13 October 2021 |
| | | | | US | 2020336998 | A1 | 22 October 2020 |
| | | | | WO | 2020218820 | A1 | 29 October 2020 |
| US | 2021314037 | A1 | 07 October 2021 | WO | 2021201624 | A1 | 07 October 2021 |
| WO | 2020248821 | A1 | 17 December 2020 | CN | 113940125 | A | 14 January 2022 |
| | | | | US | 2022216963 | A1 | 07 July 2022 |
| | | | | EP | 3984311 | A1 | 20 April 2022 |
| | | | | WO | 2020248158 | A1 | 17 December 2020 |
| US | 2020099488 | A1 | 26 March 2020 | CN | 110419169 | A | 05 November 2019 |
| | | | | WO | 2018169375 | A1 | 20 September 2018 |
| | | | | JP | 2020512731 | A | 23 April 2020 |
| | | | | EP | 3598658 | A1 | 22 January 2020 |

Form PCT/ISA/210 (patent family annex) (January 2015)